# EUROPÄISCHE PATENTSCHRIFT

(11) **EP 2 807 394 B1**
(45) Veröffentlichungstag und Bekanntmachung des Hinweises auf die Patenterteilung: **08.06.2016**
(21) Anmeldenummer: 12815610.6
(22) Anmeldetag: 13.12.2012
(51) Int. Cl.: F16F 9/512, F16F 7/06, F16F 9/12

(54) **VORRICHTUNG ZUR DÄMPFUNG DER BEWEGUNG EINES BEWEGLICH GELAGERTEN BAUTEILS**
DEVICE FOR DAMPING THE MOVEMENT OF A MOVABLY MOUNTED COMPONENT
DISPOSITIF D'AMORTISSEMENT DU MOUVEMENT D'UN ÉLÉMENT STRUCTURAL MONTÉ MOBILE

(30) Priorität: 25.01.2012 AT 842012
(43) Veröffentlichungstag der Anmeldung: 03.12.2014
(73) Patentinhaber: FULTERER Gesellschaft mbH, 6890 Lustenau (AT)
(72) Erfinder: MÜLLER, Wolfgang, A-6890 Lustenau (AT); GRÜBEL, Edwin, CH-9443 Widnau (CH)
(74) Vertreter: Hofmann, Ralf U.
(86) Internationale Anmeldenummer: PCT/AT2012/000316
(87) Internationale Veröffentlichungsnummer: WO 2013/110101

(56) Entgegenhaltungen:
- EP-A1- 0 593 810
- DE-A1- 19 615 433
- DE-A1-102006 022 563
- DE-A1-102006 051 688
- DE-C- 654 017
- US-B1- 7 032 985

## Beschreibung

Die Erfindung bezieht sich auf eine Vorrichtung zur Dämpfung der Bewegung eines beweglich gelagerten Bauteils, umfassend eine erste, mechanisch wirkende Bremsvorrichtung, welche mindestens eine Reibpaarung aufweist, bei der zur Erzeugung einer Bremskraft eine angetriebene Reibfläche um eine Achse der ersten Bremsvorrichtung gegenüber einer an ihr anliegenden festgehaltenen Reibfläche verdrehbar ist, und eine zweite Bremsvorrichtung, die mit der ersten Bremsvorrichtung gekoppelt ist, wobei die gegenseitige Anpressung der Reibflächen der Reibpaarung oder von mindestens einer der Reibpaarungen der ersten Bremsvorrichtung in Abhängigkeit von einer von der zweiten Bremsvorrichtung ausgeübten Bremskraft erfolgt wobei die zweite Bremsvorrichtung mindestens eine um eine Achse der zweiten Bremsvorrichtung drehbare, angetriebene Dämpferfläche aufweist, die mit mindestens einer festgehaltenen Dämpferfläche mindestens einen Spalt einschließt, in welchem sich ein viskoses Dämpfungsmedium befindet, welches beim Verdrehen der mindestens einen angetriebenen Dämpferfläche gegenüber der mindestens einen festgehaltenen Dämpferfläche eine Bremskraft der zweiten Bremsvorrichtung hervorruft.

Dämpfungsvorrichtungen, wie sie beispielsweise zur Dämpfung von beweglich gelagerten Möbelteilen, wie Schubladen, eingesetzt werden, sind in unterschiedlichen Ausführungsformen bekannt. So sind beispielsweise Kolben-Zylinder-Einheiten bekannt, bei denen im Kolben und/oder zwischen dem Kolben und dem Zylinder zumindest eine Durchströmöffnung für ein durchströmendes Fluid, beispielsweise eine Hydraulikflüssigkeit, vorgesehen ist. Derartige Dämpfer gehen beispielsweise aus der DE 20 2005 020 820 U1 und DE 10 213 726 A1 hervor. Bekannt sind weiter Rotationsdämpfer, bei denen in einem Spalt zwischen einem feststehenden Dämpferteil und einem drehbar gelagerten Dämpferteil ein hochviskoses Dämpfungsmedium angeordnet ist. Die Bremskraft wird von diesem auf Scherung belasteten Dämpfungsmedium hervorgerufen. Dämpfer dieser Art gehen beispielsweise aus der DE 10 210 917 C1, US 5,277,282 A, JP 59222631 A und US 5,143,432 A hervor.

Vorteilhaft bei diesen vorbekannten pneumatischen, hydraulischen und Scherreibungsdämpfern ist es, dass die hervorgerufene Bremskraft von der Bewegungsgeschwindigkeit des zu dämpfenden Bauteils abhängt, so dass ein sich schneller bewegendes Bauteil stärker gedämpft wird, was in vielen Anwendungsfällen gewünscht ist. Nachteilig sind die bezogen auf die Baugröße relativ geringen erzielbaren Bremskräfte (insbesondere bei rein pneumatisch wirkenden Dämpfern und Scherreibungsdämpfern), die erforderlichen Abdichtungen (insbesondere bei hydraulischen Dämpfern) und die relativ hohen Reibungskräfte, die bei niedrigen Geschwindigkeiten der Betätigung des Dämpfers zu überwinden sind. Es sind dies Reibungskräfte, die unabhängig von der Bremswirkung des Dämpfermediums wirken (=Leerreibung).

Weiters ist der Einsatz von rein mechanisch wirkenden Reibungsdämpfern bekannt. So gehen beispielsweise aus der DE 19 938 626 A1, der DE 201 16 197 U1 und der JP 01266331 A Umschlingungsteile hervor, die ein innen liegendes Reibteil umgeben und mit diesem eine Reibpaarung ausbilden. Reibungsdämpfer haben den Nachteil, dass die von Ihnen ausgeübte Bremskraft grundsätzlich geschwindigkeitsunabhängig ist.

Aus der DE 10313659 B3, DE 10 214 596 A1, DE 19 717 937 A1, AT 503 877 B1 und EP 1 260 159 A2 gehen Kolben-Zylinder-Einheiten hervor, bei denen eine zwischen den beiden Kolbenseiten sich ausbildende Luftdruckdifferenz auf ein elastisch verformbares Kolbenteil wirkt, welches in Abhängigkeit von der Druckdifferenz mehr oder weniger stark an die Zylinderinnenseite angedrückt wird. Die zwischen dem elastischen Kolbenteil und der Zylinderinnenwand wirkende Reibkraft hängt also von der Druckdifferenz und somit von der Geschwindigkeit der Bewegung des zu dämpfenden Bauteils ab. Es werden damit lineare Dämpfer bereitgestellt, bei denen eine mechanisch wirkende Bremsvorrichtung mit einer pneumatisch wirkenden Bremsvorrichtung gekoppelt wird, welche die Bremskraft der mechanisch wirkenden Bremsvorrichtung steuert. Nachteilig bei diesen vorbekannten Dämpfern ist es u.a., dass sich zuerst eine Druckdifferenz aufbauen muss, bis die Bremskraft des Reibungsdämpfers einsetzt, was mit einer mehr oder weniger großen Zeitverzögerung des Einsetzens der Dämpfungswirkung verbunden ist. Auch ist die Dämpfungscharakteristik für viele Anwendungen unvorteilhaft bzw. lässt sich nur schwer an verschiedene Anwendungen anpassen. Ein linearer Dämpfer ist auch auf eine begrenzte Betätigungsstrecke eingeschränkt bzw. es müssen die Abmessungen eines linearen Dämpfers der gewünschten Betätigungsstrecke entsprechen.

Eine Vorrichtung, die als Fahrzeugstoßdämpfer ausgebildet ist, umfassend einen Reibungsdämpfer und einen hydraulischen Dämpfer geht aus der DE 601 293 C hervor. Ein flexibel ausgebildetes Umschlingungsteil liegt reibend an einem von einer Reibungstrommel gebildeten inneren Reibteil an. Ein Ende des Umschlingungsteils ist mit der zu dämpfenden Fahrzeugachse verbunden. Das andere Ende des Umschlingungsteils steht mit der hydraulischen Dämpfvorrichtung in Verbindung. Diese ist innerhalb der Reibtrommel angeordnet und umfasst Flügel, die drehbar gelagert sind und in einer Kammer angeordnet sind, welche eine Flüssigkeit enthält. Durch Löcher in den Flügeln kann die Flüssigkeit von einer Seite auf die andere Seite des Flügels übertreten. Alternativ können die Löcher auch in Kammerwandungen angeordnet sein, die zwei Kammern miteinander verbinden. Die Reibungskraft des rotatorischen Reibdämpfers wird damit vom hydraulischen Dämpfer gesteuert, sodass dadurch eine insgesamt geschwindigkeitsabhängige Bremskennlinie erreicht wird. Nachteilig bei dieser Vorrichtung ist es, dass diese eine relativ große Baugröße aufweist. Auch müssen auf Grund der in der Flüssigkeit auftretenden hohen Drücke hochwertige Abdichtungen vorhanden sein. Solche Abdichtungen verursachen auch Reibung, sodass die Leichtgängigkeit bei geringen Bewegungsgeschwindigkeiten eingeschränkt ist (=erhöhte Leerreibung).

Aus der DE 10 2006 022 563 A1 geht eine Vorrichtung der eingangs genannten Art mit einem Rotationsdämpfer mit schräg zur Längsachse eines Rotors verkippten Rotorblättern hervor, die sich in einem viskosen Dämpfungsmedium drehen, wodurch auch eine axiale Kraftkomponente erzeugt wird. Zusätzlich sind Reibflächen vorhanden, welche in einer Ausführungsform durch die erzeugte axiale Kraftkomponente bei einer ausreichend hohen Drehgeschwindigkeit des Rotors zusammengedrückt werden, um eine zusätzliche Dämpfungskraft zu erzeugen. In einer anderen Ausführungsform ist eine Trägheitskupplung vorhanden, die die zusätzlichen Reibflächen beschleunigungsabhängig zusammendrückt.

Wie erwähnt werden Dämpfungsvorrichtungen häufig zum Dämpfen der Einfahrbewegung von ausziehbaren Möbelteilen, wie Schubladen und ausziehbaren Hochschränken, eingesetzt. Diese ausziehbaren Möbelteile sind dann üblicherweise auch mit einer Selbsteinzugsvorrichtung ausgestattet. Diese zieht das ausziehbare Möbelteil über einen letzten Abschnitt der Einfahrstrecke in dessen geschlossenen Zustand ein, wobei die Einfahrbewegung durch die Dämpfungsvorrichtung gedämpft ist. Selbsteinzugsvorrichtungen sind in unterschiedlichen Ausführungsformen bekannt geworden. Bei einer herkömmlichen Ausführungsform ist ein federbeaufschlagter Kippschieber vorgesehen, der mit einem am ausziehbaren Möbelteil angebrachten Mitnehmer zusammenwirkt und vom Mitnehmer zwischen einer Basisstellung und einer Wartestellung verstellt wird, welche der Kippschieber im ausgezogenen Zustand des ausziehbaren Möbelteils einnimmt. Ein Beispiel für eine solche Selbsteinzugsvorrichtung, hier in Kombination mit einer Ausziehsperreinrichtung, geht aus der EP 1 500 763 A2 hervor. Aus der GB 1 117 071 geht eine Zuhaltevorrichtung hervor, bei der ein federbeaufschlagter Fangarm um eine Achse verschwenkbar gelagert ist und vom Mitnehmer zwischen der Basisstellung und der Wartestellung um diese Achse verschwenkt wird. Die Feder wird hierbei über einen Totpunkt bewegt.

Wenn mehrere ausziehbare Möbelteile vorhanden sind, die nur wechselweise ausziehbar sein sollen, beispielsweise mehrere übereinander angeordnete Schubladen, so werden Ausziehsperrvorrichtungen eingesetzt. Auch eine Zentralverriegelung kann über solche Ausziehsperrvorrichtungen verwirklicht werden. In einer häufigen Ausbildungsform sind Sperrstangen vorhanden, die nur einen begrenzten Freiraum für ihre Verschiebung aufweisen. Für jedes ausziehbare Möbelteil ist ein Betätigungsteil vorgesehen, welches mit mindestens einer der Sperrstangen zusammenwirkt. Beim Ausziehen eines der ausziehbaren Möbelteile wird mindestens eine der Sperrstangen verschoben, so dass der Freiraum für die Verschiebung der Sperrstangen aufgebraucht ist und ein weiteres ausziehbares Möbelteil somit nicht gleichzeitig ausgezogen werden kann. Eine derartige Ausziehsperrvorrichtung geht beispielsweise aus der bereits erwähnten EP 1 500 763 A2 hervor. Aus der GB 2 376 043 A geht eine Ausziehsperrvorrichtung hervor, bei der die Betätigungsteile um Achsen verschwenkt werden, die parallel zur Längserstreckung der Sperrstangen liegen und mit den Sperrstangen zusammenwirkende Nocken aufweisen.

Ausziehsperrvorrichtungen mit Sperrstangen sind in unterschiedlichen weiteren Ausführungsformen bekannt. Beispielsweise die DE 29 620 152 U1, EP 1 336 709 A1 und WO 2008/107499 A1 zeigen eine Betätigung der Sperrstangen durch Betätigungsteile, welche um eine rechtwinkelig zu den Sperrstangen liegende Achse beim Ausziehen des jeweiligen ausziehbaren Möbelteils verschwenkt werden. Beispielsweise aus der GB 2 376 043 A geht eine Ausziehsperrvorrichtung hervor, bei der die Betätigungsteile um Achsen verschwenkt werden, die parallel zur Längserstreckung der Sperrstangen liegen und mit den Sperrstangen zusammenwirkende Nocken aufweisen.

Aufgabe der Erfindung ist es eine Dämpfungsvorrichtung der eingangs genannten Art bereitzustellen, die eine geschwindigkeitsabhängige Bremskraft aufweist, wobei eine kompakte Ausbildung der Vorrichtung ermöglicht wird und bei geringen Bewegungsgeschwindigkeiten des zu dämpfenden Bauteils die zu überwindende Reibung der Vorrichtung gering gehalten werden soll. Erfindungsgemäß gelingt dies durch eine Vorrichtung mit den Merkmalen des Anspruchs 1.

Bei der Vorrichtung gemäß der Erfindung ist in mindestens einem Spalt der zweiten Bremsvorrichtung, welcher zwischen einer um eine Achse der zweiten Bremsvorrichtung drehbaren, angetriebenen Dämpferfläche und einer bezüglich der Drehung um die Achse festgehaltenen Dämpferfläche ausgebildet ist, ein viskoses Dämpfungsmedium angeordnet. Dieses, vorzugsweise den mindestens einen Spalt vollständig ausfüllende, Dämpfungsmedium, ruft beim Verdrehen der mindestens einen durch die Bewegung des zu dämpfenden Bauteils angetriebenen Dämpferfläche gegenüber der mindestens einen festgehaltenen Dämpferfläche eine Bremskraft der zweiten Bremsvorrichtung hervor.

Die von der zweiten Bremsvorrichtung hervorgerufene Bremskraft beeinflusst über die Kopplung die Bremskraft der ersten, mechanisch wirkenden Bremsvorrichtung, welche auch als Rotations-Reibungsdämpfer bezeichnet werden könnte. Hierzu wird die gegenseitige Anpressung (=Andrückkraft) der Reibflächen der Reibpaarung bzw. von mindestens einer der Reibpaarungen in Abhängigkeit von der Bremskraft der zweiten Bremsvorrichtung verändert, wobei die Anpressung mit zunehmender Bremskraft der zweiten Bremsvorrichtung steigt. Durch die Kopplung wird also eine zwischen der zweiten und der ersten Bremsvorrichtung wirkende Wirkverbindung hergestellt, direkt oder über mindestens ein dazwischen liegendes Kopplungsteil. Durch die Erfindung kann ein kompakter, kostengünstiger Dämpfer mit einer vorteilhaften Bremscharakteristik bereitgestellt werden, wobei die Höhe der Bremskraft von der Geschwindigkeit des zu dämpfenden Bauteils abhängt. Eine geringe Leerreibung kann erreicht werden. Da die erste und zweite Bremsvorrichtung in Form von Rotationsdämpfern ausgebildet sind, kann gegebenenfalls eine Dämpfung über einen prinzipiell unbegrenzten Weg erreicht werden.

Falls die erste Bremsvorrichtung mehr als eine Reibpaarung umfasst, sind diese vorzugweise alle um die gleiche Achse drehbar (also koaxial). Falls die zweite Bremsvorrichtung mehr als eine angetriebene Dämpferfläche umfasst, sind diese vorzugsweise alle um die gleiche Achse drehbar (also koaxial).

Vorteilhafterweise fällt die Achse der ersten Bremsvorrichtung, um die die mindestens eine angetriebene Reibfläche der ersten Bremsvorrichtung drehbar ist, mit der Achse der zweiten Bremsvorrichtung zusammen (=stimmt mit dieser überein), um die die mindestens eine angetriebene Dämpferfläche der zweiten Bremsvorrichtung drehbar ist, d.h. die mindestens eine angetriebene Reibfläche der ersten Bremsvorrichtung und die mindestens eine angetriebene Dämpferfläche der zweiten Bremsvorrichtung sind also um die gleiche Achse drehbar bzw. koaxial. Es wird dadurch eine einfache, kompakte Ausbildung erreicht.

Günstigerweise weist die Reibpaarung oder mindestens eine der Reibpaarungen der ersten Bremsvorrichtung einen Gleitreibungskoeffizienten von mindestens 0,2, vorzugsweise mindestens 0,3 auf.

Die Viskosität des viskosen Dämpfungsmediums der zweiten Bremsvorrichtung beträgt vorteilhafterweise mehr als 20.000 Pa s, vorzugweise mehr als 50.000 Pa s, wobei Werte im Bereich von 100.000 bis 1.000.000 Pa s besonders bevorzugt sind.

Die Spaltbreite des Spalts bzw. mindestens eines der Spalte, vorzugsweise aller Spalte, in dem bzw. in denen das Dämpfungsmedium angeordnet ist, liegt vorteilhafterweise im Bereich von 0,1 mm bis 0,5mm, d.h. das Dämpfungsmedium weist eine solche Schichtdicke auf.

Die Dämpfungskraft wird vom im mindestens einen Spalt angeordneten Dämpfungsmedium dadurch hervorgerufen, dass dieses auf Scherung belastet wird. Der das Dämpfungsmedium aufweisende Spalt bzw. diese Spalte erstrecken sich vorzugsweise ringförmig um die Achse der zweiten Bremsvorrichtung.

Zum Zurückhalten des Dämpfungsmediums im Spalt bzw. im jeweiligen Spalt können, wenn überhaupt, relativ einfach ausgebildete Dichtungen eingesetzt werden. Bei nicht fließfähigen Fetten können Dichtungen gegebenenfalls ganz entfallen. Bei fließfähigen Ölen sind Dichtungen, die ein Auslaufen des Öls verhindern, erforderlich, wobei auf die Dichtungen keine hohen Drücke wirken.

Erfindungsgemäß umfasst die erste Bremsvorrichtung ein flexibel, vorzugsweise elastisch biegbar, ausgebildetes Umschlingungsteil oder eine Umschlingungseinheit, welche mindestens zwei gelenkig miteinander verbundene Backenteile umfasst. Das Umschlingungsteil bzw. die Umschlingungseinheit umgibt ein inneres Bremsteil über einen Teil seines Umfangs, der zumindest mehr als 90°, vorzugsweise mindestens 180°, besonders bevorzugt mindestens 250° beträgt. Vorzugsweise erstreckt sich das Umschlingungsteil bzw. die Umschlingungseinheit über höchstens 500°, besonders bevorzugt über höchstens 330° um das innere Bremsteil herum. Das Umschlingungsteil bzw. die Umschlingungseinheit und das innere Bremsteil bilden die Reibpaarung oder mindestens eine der Reibpaarungen der ersten Bremsvorrichtung.

Die Kopplung mit der zweiten Bremsvorrichtung erfolgt hierbei dadurch, dass ein hinteres Ende des Umschlingungsteils bzw. der Umschlingungseinheit direkt oder indirekt mit einem Teil der zweiten Bremsvorrichtung verbunden ist, welches eine von der zweiten Bremsvorrichtung hervorgerufene Bremskraft auf das Umschlingungsteil bzw. die Umschlingungseinheit überträgt. Dieses Teil der zweiten Bremsvorrichtung ist in Form einer Dämpferhülse ausgebildet, die mindestens eine der Dämpferflächen der zweiten Bremsvorrichtung aufweist. Die Bezeichnung "hinteres Ende" bezieht sich auf die Relativbewegung zwischen dem Umschlingungsteil bzw. der Umschlingungseinheit und dem inneren Bremsteil. Hierbei kann entweder das Umschlingungsteil bzw. die Umschlingungseinheit vom zu dämpfenden Bauteil angetrieben sein und sich gegenüber dem inneren Bremsteil in eine Drehrichtung drehen oder das innere Bremsteil kann angetrieben sein und sich gegenüber dem Umschlingungsteil bzw. der Umschlingungseinheit in eine entgegengesetzte Drehrichtung drehen.

Eine erfindungsgemäße Vorrichtung eignet sich zur Dämpfung unterschiedlicher Arten von beweglich gelagerten Bauteilen, mit anderen Worten zur Ausübung einer Bremskraft auf unterschiedliche Arten von beweglich gelagerten Bauteilen. So kann die Bewegung eines linear beweglich gelagerten Bauteils, z.B. eines linear beweglich gelagerten Möbelteils, wie einer Schublade oder eines Schrankaüszugs, oder die Bewegung eines drehbar gelagerten Bauteils, z.B. einer Türe oder einer Klappe in Form eines Möbelteils oder als Teil in oder an einem Fahrzeug gedämpft werden. Unterschiedliche andere Arten von linear oder drehbar beweglich gelagerten Teilen, wie Maschinenteilen, können durch eine erfindungsgemäße Vorrichtung ebenfalls gedämpft werden.

Durch eine erfindungsgemäße Vorrichtung können hohe Dämpfungskräfte aufgebracht werden, sodass die Vorrichtung beispielsweise zur Dämpfung der Einschubbewegung von Schwerlastauszügen eingesetzt werden kann. Bei Schwerlastauszügen sind ausziehbare Möbelteile vorgesehen, von denen eines, mehrere oder alle mit mehr als 150kg beladbar sind.

Weitere Vorteile und Einzelheiten der Erfindung werden im Folgenden anhand der beiliegenden Zeichnung erläutert. In dieser zeigen:
Fig. 1 eine Schrägsicht einer ersten Ausführungsform einer erfindungsgemäßen Vorrichtung;
Fig. 2 eine Schrägsicht entsprechend Fig. 1 der quer aufgeschnittenen Vorrichtung;
Fig. 3 eine Explosionsdarstellung;
Fig. 4 eine Schrägsicht von erfindungsgemäßen Vorrichtungen gemäß einer zweiten Ausführungsform im Einsatz zur Dämpfung der Einschubbewegung von ausziehbaren Möbelteilen;
Fig. 5 eine Schrägsicht einer der Vorrichtungen von Fig. 4, in der im ausgezogenen Zustand des ausziehbaren Möbelteils eingenommenen Wartestellung des Fangarms, mit einer Befestigungsschiene;
Fig. 6 eine Schrägsicht entsprechend Fig. 5 im Zustand, der im eingefahrenen Zustand des ausziehbaren Möbelteils vorliegt;
Fig. 7 eine Schrägsicht entsprechend Fig. 6 aber aus einem anderen Blickwinkel;
Fig. 8 eine Ansicht der an der Schiene befestigten Vorrichtung, mit sich in der Wartestellung befindendem Fangarm;
Fig. 8a eine Darstellung entsprechend Fig. 8, aber im Längsmittelschnitt der Vorrichtung;
Fig. 9 einen Schnitt entlang der Linie AA von Fig. 8 bzw. 8a;
Fig. 10 und 11 Schnitte entsprechend Fig. 9, aber in einer Zwischenstellung und in der im eingefahrenen Zustand des ausziehbaren Möbelteils eingenommenen Grundstellung des Fangarms;
Fig. 12 einen Schnitt entlang der Linie BB von Fig. 8 bzw. 8a;
Fig. 13 eine Explosionsdarstellung;
Fig. 14 eine Schrägsicht der in einem parallel zur Achse und durch die Achse verlaufenden Schnitt aufgeschnittenen Vorrichtung;
Fig. 15 eine Darstellung zur Erläuterung der Einfahrbewegung des Fangarms der Vorrichtung in die Kulisse des Mitnehmers;
Fig. 16 eine geringfügig modifizierte Ausführungsvariante der Vorrichtung mit zusätzlichen Elementen zur Ausbildung einer Ausziehsperrvorrichtung;
Fig. 17 eine Explosionsdarstellung dieser modifizierten Ausführungsform;
Fig. 17a eine Schrägsicht des mit der Dämpferhülse in Eingriff stehenden Umschlingungsteils aus einer gegenüber Fig. 17 unterschiedlichen Blickrichtung;
Fig. 18 und 19 schematische Darstellungen einer alternativen Ausführungsvariante für die Betätigung der Sperrstangen;
Fig. 20 und 21 Darstellungen entsprechend Fig. 18 und 19 aber ohne die Betätigungshülse;
Fig. 22 eine Schrägsicht entsprechend Fig. 5 einer weiteren Modifikation der zweiten Ausführungsform;
Fig. 23a und 23b eine modifizierte Ausführungsform zu der anhand der Fig. 1 bis 3 beschriebenen ersten Ausführungsform, in Schrägsicht und in einer Explosionsdarstellung.

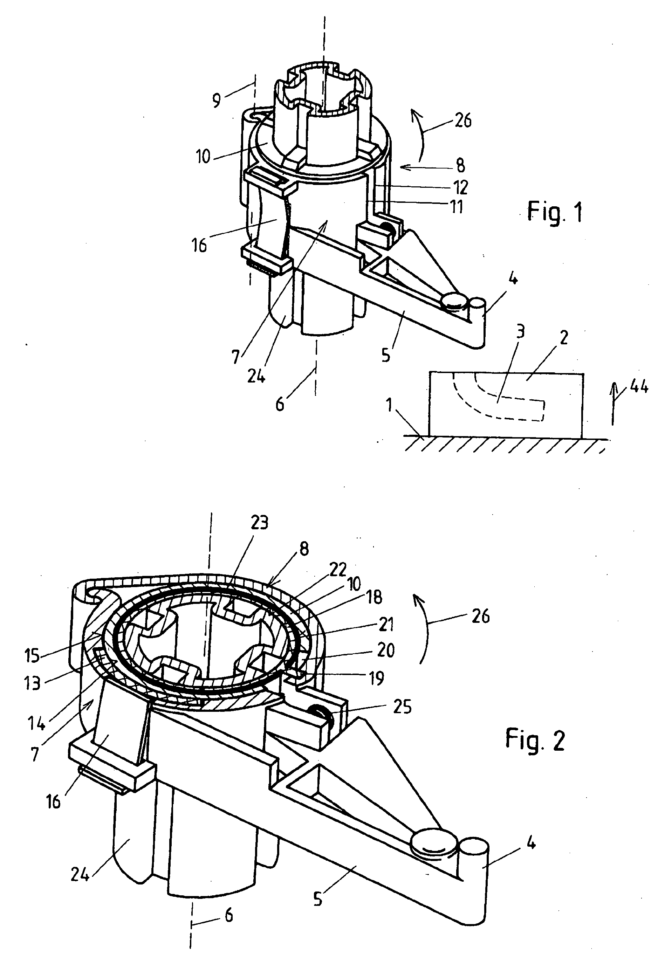

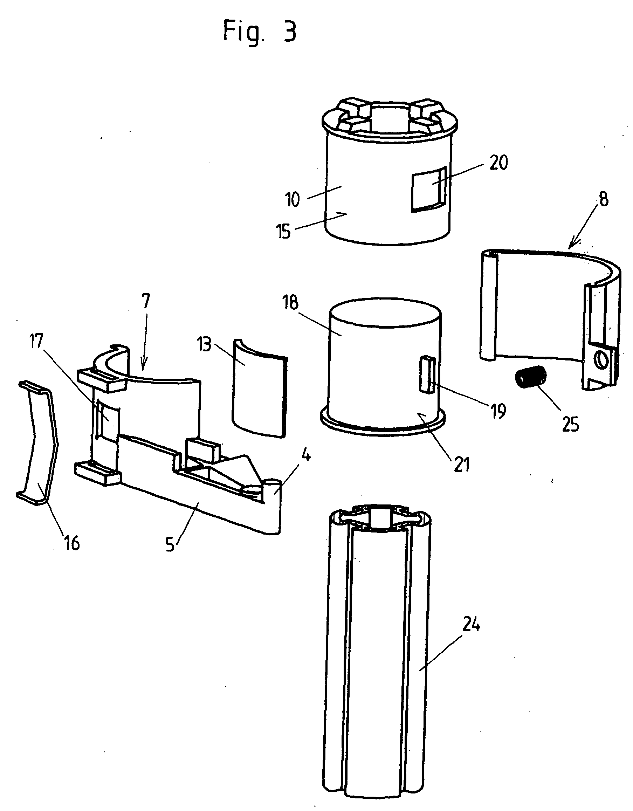

Eine erste Ausführungsform einer erfindungsgemäßen Vorrichtung ist in den Fig. 1 bis 3 dargestellt.

Die Vorrichtung dient zur Dämpfung der Bewegung eines beweglich gelagerten Bauteils 1, das in Fig. 1 nur schematisch angedeutet ist. Am Bauteil 1 ist der ebenfalls nur schematisch angedeutete Mitnehmer 2 angeordnet, der eine von einer Vertiefung ausgebildete Kulissenbahn 3 aufweist. Zum Dämpfen der Bewegung des Bauteils 1 in die Bewegungsrichtung 44 läuft ein an einem Fangarm 5 (=Fanghebel) angeordneter Vorsprung 4 in die Kulissenbahn 3 ein, wobei der Fangarm 5 um die Achse 6 in Richtung des Pfeils 26 gedreht wird und hierbei gebremst wird und damit die Bewegung des Bauteils 1 bremst. Der Vorsprung 4 wird im Ausführungsbeispiel von einem Zapfen gebildet, könnte beispielsweise aber auch von einer Rolle gebildet werden. Auch eine umgekehrte Ausbildung (Vorsprung am Mitnehmer, Ausnehmung am Fangarm) ist möglich. Auch in anderer Form ausgebildete Mitnahmeverbindungen, beispielsweise eine im wesentlichen V-förmig ausgebildete Ausnehmung, in die ein Vorsprung einläuft, um den Fangarm 5 vom anlaufenden Mitnehmer 2 zu drehen, sind möglich. Unterschiedliche Arten von möglichen Mitnahmeverbindungen sind beispielsweise von herkömmlichen ausziehbaren Möbelteilen mit Selbsteinzugsvorrichtungen her bekannt.

Der Fangarm 5 ist an einem vorderen Backenteil 7 angebracht oder einstückig mit diesem ausgebildet. Das vordere Backenteil 7 ist mit einem hinteren Backenteil 8 gelenkig verbunden, sodass die Backenteile 7, 8 zumindest begrenzt um eine Schwenkachse 9 gegeneinander verschwenkbar sind, die parallel zur Achse 6 liegt.

Das vordere und das hintere Backenteil 7, 8 bilden zusammen eine Umschlingungseinheit, die ein inneres Bremsteil 10 über einen Großteil seines Umfangs umgeben. Die Umschlingungseinheit umgibt das innere Bremsteil 10 im Ausführungsbeispiel über dessen gesamten Umfang, abgesehen von einem Spalt, der zwischen dem von der gelenkigen Verbindung mit dem hinteren Backenteil abgelegenen vorderen Ende 11 des vorderen Backenteils 7 und dem von der gelenkigen Verbindung mit dem vorderen Backenteil 7 abgelegenen hinteren Ende 12 des hinteren Backenteils 8 liegt. Dieser Spalt erstreckt sich vorzugsweise über weniger als 45° bezogen auf den Winkel um die Achse 6.

Ein Basisteil des vorderen Backenteils 7 besitzt an seiner Innenseite eine Vertiefung, in der ein Bremsbelag 13 angeordnet ist. Dessen innere (=zur Achse 6 gerichtete) Oberfläche bildet eine angetriebene Reibfläche 14, die an der äußeren (=von der Achse 6 weggerichteten) Oberfläche des inneren Bremsteils 10 anliegt, welche eine festgehaltene Reibfläche 15 bildet. Das innere Bremsteil 10 ist gegen eine Drehung um die Achse 6 festgehalten, im Ausführungsbeispiel durch eine drehfeste Verbindung mit der drehfest montierten Welle 24.

Die Reibflächen 14, 15 bilden eine Reibpaarung, wodurch der Drehung der angetriebenen Reibfläche 14 um die Achse 6 eine Bremskraft entgegengesetzt ist, deren Größe von der gegenseitigen Anpresskraft der Reibflächen 14, 15 abhängt. Der Bremsbelag 13 ist von einer Andrückfeder 16 an das innere Bremsteil 10 angedrückt, wobei im gezeigten Ausführungsbeispiel zu diesem Zweck eine gebogene Blattfeder vorgesehen ist, welche an der Außenseite des vorderen Backenteils von diesem gehalten ist und den Bremsbelag 13 durch eine Öffnung 17 im Basisteil des vorderen Backenteils 7 hindurch beaufschlagt.

Die Vorrichtung weist somit eine erste, mechanisch wirkende Bremsvorrichtung auf, die als Rotationsdämpfer ausgebildet ist und die das vordere und das hintere Backenteil 7, 8 umfassende Umschlingungseinheit und das innere Bremsteil 10 umfasst. Die Bremskraft dieser ersten Bremsvorrichtung wird von einer zweiten Bremsvorrichtung in Abhängigkeit von der Bewegungsgeschwindigkeit des zu dämpfenden Bauteils 1 eingestellt (=gesteuert), wie nachfolgend erläutert wird.

Das hintere Backenteil 8 ist mit einer Dämpferhülse 18 verbunden, sodass die Dämpferhülse 18, wenn das hintere Backenteil 8 um die Achse 6 verdreht wird, vom hinteren Backenteil 8 ebenfalls um die Achse 6 gedreht wird. Im Ausführungsbeispiel besitzt die Dämpferhülse 18 hierzu eine Mitnehmernase, die nach außen durch eine Fensterausnehmung 20 im inneren Bremsteil 10 ragt und in eine Vertiefung des hinteren Backenteils 8 eingreift. Auch eine umgekehrte Ausbildung (Mitnehmernase am hinteren Backenteil 8, Vertiefung in der Dämpferhülse 18) ist beispielsweise möglich. Die Dämpferhülse 18 ist über den durch die Fensterausnehmung 20 vorgegebenen Winkelbereich gegenüber dem inneren Bremsteil 10 verdrehbar, im gezeigten Ausführungsbeispiel über etwa 45°, wobei auch größere oder kleinere Winkelbereiche möglich sind.

Die äußere (von der Achse 6 weggerichtete) Oberfläche der Dämpferhülse 18 bildet eine angetriebene Dämpferfläche 21. Die innere (zur Achse 6 gerichtete) Oberfläche des inneren Bremsteils 10 bildet eine festgehaltene Dämpferfläche 22. Die Dämpferflächen 21, 22, die insbesondere zumindest über einen Teil ihres Umfangs zylindrisch ausgebildet sind (im gezeigten Ausführungsbeispiel über ihren gesamten Umfang, abgesehen der Bereiche der Mitnehmernase 19 und der Fensterausnehmung 20), schließen zwischen sich einen Spalt ein, in dem ein viskoses Dämpfungsmedium angeordnet ist, welches hier in Form eines nicht fließfähigen Fettes ausgebildet ist. Bei der Verdrehung der angetriebenen Dämpferfläche 21 gegenüber der festgehaltenen Dämpferfläche 22 kommt es durch die auf das Dämpfungsmedium 23 wirkende Scherreibung zu einer Bremskraft.

Die Vorrichtung umfasst somit eine zweite Bremsvorrichtung, welche als Rotationsdämpfer ausgebildet ist und die Dämpferhülse 18 und das innere Bremsteil 10 sowie das im Spalt zwischen ihnen angeordnete Dämpfungsmedium 23 umfasst.

Stattdessen könnte das Dämpfungsmedium 23 im Spalt zwischen der Dämpferhülse 18 und der feststehenden Welle 24 angeordnet sein. Die angetriebene Dämpferfläche würde dann von der inneren Oberfläche der Dämpferhülse 18 und die festgehaltene Dämpferfläche würde dann von der äußeren Oberfläche der Welle 24 gebildet werden und die zweite Bremsvorrichtung würde dann die Dämpferhülse 18 und die feststehende Welle 24 umfassen. Es könnte auch sowohl im Spalt zwischen der Dämpferhülse 18 und dem inneren Bremsteil 10 als auch im Spalt zwischen der Dämpferhülse 18 und der Welle 24 ein viskoses Dämpfungsmedium 23 angeordnet sein, sodass in diesem Fall die zweite Bremsvorrichtung alle diese Teile umfassen würde und zwei angetriebene Dämpferflächen und zwei festgehaltene Dämpferflächen vorhanden wären.

Die von der zweiten Bremsvorrichtung ausgeübte Bremskraft bremst die Drehung der Dämpferhülse 18 um die Achse 6. Auf das hintere Backenteil 8 wird dadurch bei der Drehung der Umschlingungseinheit um die Achse 6 eine Rückhaltekraft ausgeübt, und zwar umso mehr, je größer die Drehgeschwindigkeit der Umschlingungseinheit um die Achse 6 ist. Das vordere und das hintere Backenteil 7, 8 werden dadurch mehr oder weniger stark zusammengedrückt, wobei der Bremsbelag 13 mehr oder weniger stark nach außen gegen die Andrückfeder 16 verschoben wird, dadurch die Andrückfeder 16 spannt und somit die gegenseitige Andrückkraft der Reibflächen vergrößert wird. Die Bremskraft der ersten Bremsvorrichtung nimmt dadurch bei steigender Geschwindigkeit des Bauteils 1 zu.

Wenn eine maximale Andrückkraft des Bremsbelags 13 am inneren Bremsteil 10 erreicht ist, kommt es bei einem weiteren Zusammendrücken der Backenteile 7, 8 zur Anlage der neben dem Bremsbelag 13 liegenden Bereiche der inneren Oberfläche des vorderen Backenteils 7 an das innere Bremsteil 10. Der gegenseitige Reibungskoeffizient dieser zusammenwirkenden Flächen ist aber wesentlich kleiner als der Reibungskoeffizient der Reibpaarung. Die Andrückkraft des Bremsbelags 13 am inneren Bremsteil 10 wird dadurch begrenzt, wodurch bei einer weiteren Erhöhung der Geschwindigkeit des Bauteils 1 die gesamte Bremskraft der Vorrichtung sich nicht mehr oder nur mehr geringfügig erhöht.

Zwischen den Enden 11, 12 der Umschlingungseinheit befindet sich eine Offenhaltefeder 25. Wenn ausgehend vom Ruhezustand das vordere Backenteil 7 um die Achse 6 mit zunehmender Geschwindigkeit gedreht wird, so muss zunächst die Kraft der Offenhaltefeder 25 überwunden werden, bis es zu einem Zusammendrücken der Backenteile 7, 8 kommt. Die Offenhaltefeder 25 kann hierzu vorgespannt sein (eine Begrenzung des Auseinanderdrückens der Enden 11, 12 ist in den Figuren der Einfachheit halber nicht dargestellt). Bei niedrigen Geschwindigkeiten des Bauteils 1 kann dadurch die von der Vorrichtung ausgeübte Bremskraft gering gehalten werden.

Im Ruhezustand drückt die Andrückfeder 16 den Bremsbelag 13 vorzugsweise nur mit einer geringen Kraft oder gar nicht an die festgehaltene Reibfläche 15 an.

Das hintere Backenteil 8 könnte ebenfalls mit einem Bremsbelag ausgestattet sein, der beispielsweise, analog zum Bremsbelag 13 des vorderen Backenteils 7 federbeaufschlagt sei könnte.

In modifizierten Ausführungsformen könnte die Federbeaufschlagung des mindestens einen Bremsbelags auch entfallen.

In der gezeigten Ausführungsform weisen das vordere und das hintere Backenteil 7, 8 abseits des Bereichs der vom mindestens einen Bremsbelag 13 gebildeten angetriebenen Reibfläche 14 an ihren inneren Oberflächen gegenüber der äußeren Oberfläche des inneren Bremsteils 10 relativ geringe Reibungskoeffizienten auf, sodass diese Oberflächenbereiche kaum zur von der ersten Bremsvorrichtung ausgeübten Bremskraft beitragen (zu weniger als 10%). In modifizierten Ausführungsformen könnten separate Bremsbeläge auch entfallen und einteilige Backenteile 7, 8 bzw. zumindest eines hiervon könnten direkt mindestens eine Reibfläche der ersten Bremsvorrichtung bilden. Es könnten hierfür geeignete Materialien des jeweiligen Backenteils und des inneren Bremsteils gewählt werden und/oder eine Beschichtung des jeweiligen Backenteils und/oder des inneren Bremsteils könnte vorgesehen sein. Auch eine Ausbildung des inneren Bremsteils mit mindestens einem von einem separaten Teil gebildeten Bremsbelag ist möglich.

Die Umschlingungseinheit könnte auch mehr als zwei um parallel zur Achse 6 liegende Achsen gelenkig miteinander verbundene Backenteile umfassen.

In einer Modifikation der ersten Ausführungsform könnte auch die die Backenteile 7, 8 aufweisende Umschlingungseinheit gegen eine Drehung um die Achse 6 festgehalten sein. Man kann sich hierzu vorstellen, dass der Fangarm 5 gegen eine Verdrehung um die Achse 6 festgehalten ist. Tatsächlich wird man den Fangarm 5 in so einer Ausführungsform wegtassen können und die Halterung gegen eine Verdrehung um die Achse 6 durch eine modifizierte Gestaltung ausbilden. Das zu dämpfende Bauteil würde in dieser modifizierten Ausführungsform die Welle 24 drehen, und zwar in eine dem Pfeil 26 entgegengesetzte Drehrichtung. Die Reibfläche 15 des inneren Bremsteils 10 wäre dann die angetriebene Reibfläche und die Reibfläche 14 der Umschlingungseinheit wäre dann die festgehaltene Reibfläche.

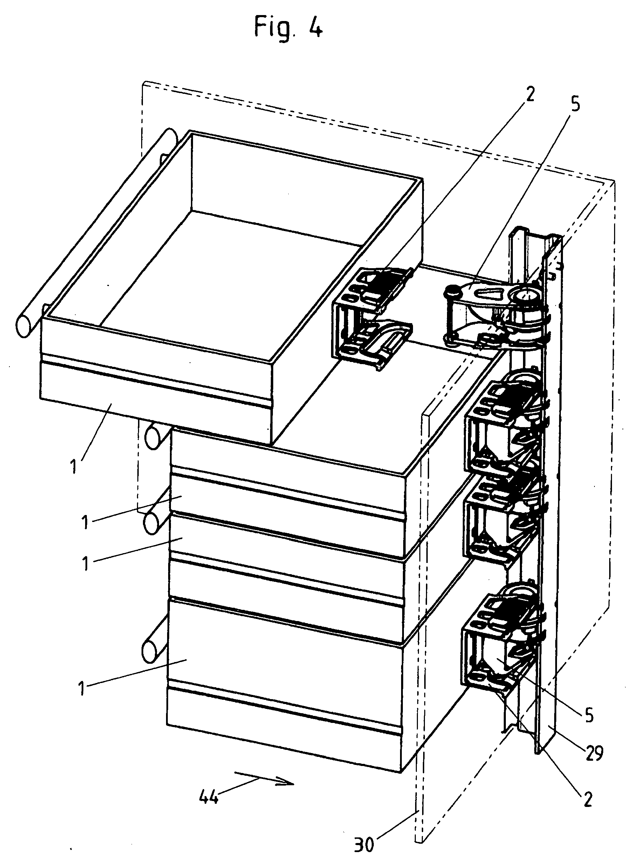

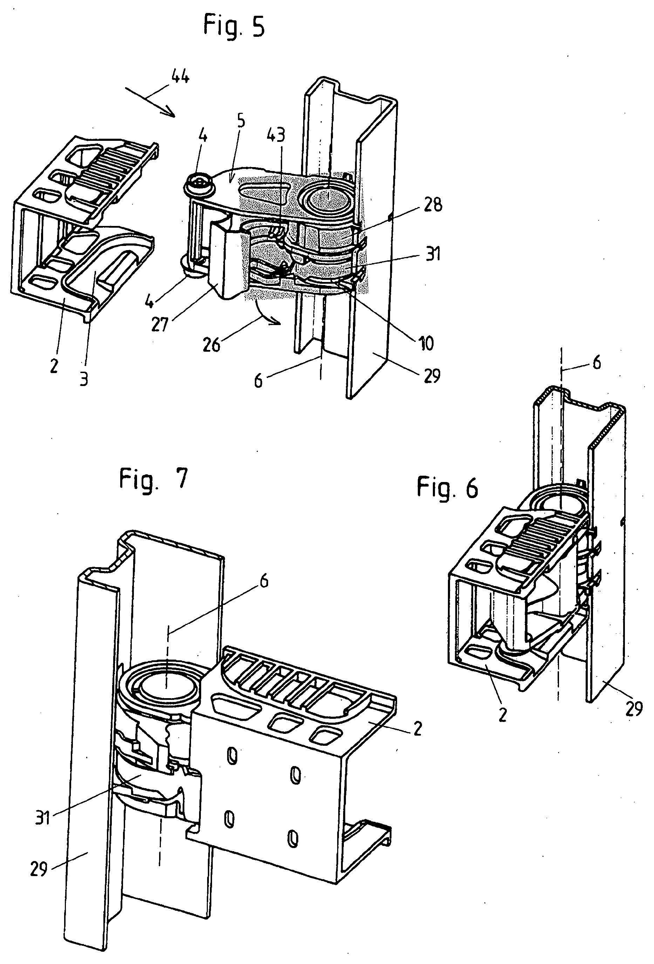

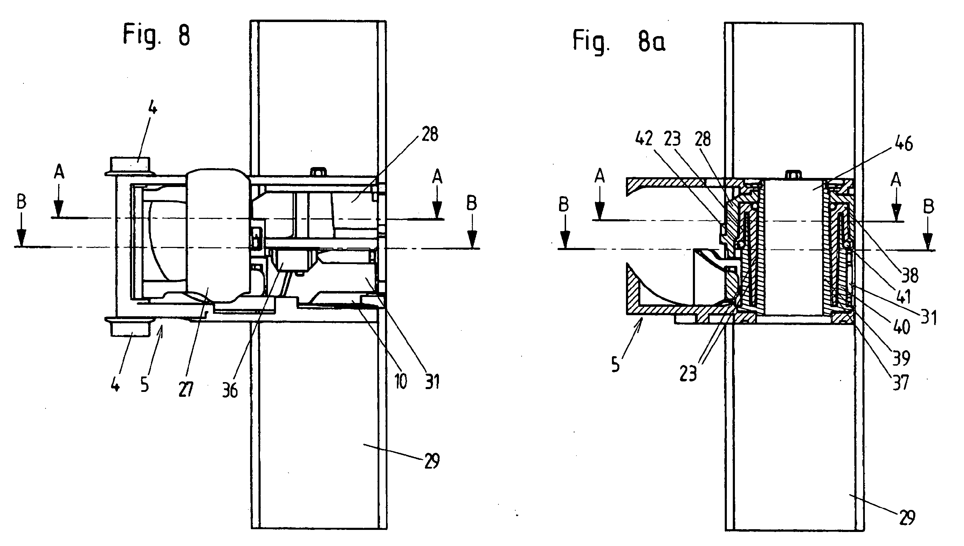

Eine zweite Ausführungsform einer erfindungsgemäßen Vorrichtung ist in den Fig. 4 bis 15 dargestellt. Die Vorrichtung wir hier zum Dämpfen der Einschubbewegung von beweglich gelagerten Bauteilen 1 eingesetzt, die von Schubladen gebildet werden, wobei die Ausziehführungen für die Schubladen nicht dargestellt sind. Auch zum Dämpfen der Einschubbewegung von anderen ausziehbaren Möbelteilen kann die Vorrichtung in analoger Weise eingesetzt werden. In die Vorrichtung ist hier zusätzlich eine Einzugsfeder 27 integriert, um einen Selbsteinzug für das ausziehbare Möbelteil über den letzten Teil des Einfahrweges bereitzustellen.

Im Wesentlichen gleichwirkende oder zumindest analoge Teile sind großteils mit den gleichen Bezugszeichen wie in der ersten Ausführungsform bezeichnet. An der Rückseite eines jeweiligen zu dämpfenden Bauteils 1 ist ein Mitnehmer 2 angebracht, der Kulissenbahnen 3 aufweist, die wie dargestellt von Vertiefungen oder auch von Durchtrittsöffnungen gebildet werden können. Ein Fangarm 5 der Vorrichtung weist Vorsprünge 4 auf, die hier von Rollen gebildet werden und mit den Kulissenbahnen 3 zusammenwirken. Eine U-förmige Ausbildung des Mitnehmers 2 mit gegenüberliegenden Kulissenbahnen 3, die jeweils mit einem Vorsprung 4 zusammenwirken, ist bevorzugt, wobei auch eine einzelne mit einem Vorsprung 4 zusammenwirkende Kulissenbahn 3 vorgesehen sein könnte. Auch eine umgekehrte Ausbildung ist möglich, bei der mindestens eine Kulissenbahn am Fangarm und mindestens ein Vorsprung am Mitnehmer vorgesehen ist.

Im eingeschobenen Zustand des ausziehbaren Möbelteils (vgl. die drei unteren Schubladen in Fig. 4 sowie die Fig. 6, 7 und 11) nimmt der Fangarm 5 seine Grundstellung ein. Beim Ausziehen des ausziehbaren Möbelteils in die Ausziehrichtung 68 wird der Fangarm 5 um die Achse 6 verschwenkt, bis er seine Wartestellung einnimmt (vgl. die obere Schublade in Fig. 4 und die Fig. 5, 8, 9 und 12). In dieser Position des Fangarms 5 koppelt der Mitnehmer 2 vom Fangarm 5 ab. Beim Einschieben des ausziehbaren Möbelteils (Bewegung in Richtung des Pfeils 44) koppelt der Mitnehmer 2 an den in seiner Wartestellung sich befindenden Fangarm 5 an, worauf sich der Fangarm 5 um die Achse 6 zurückdreht bis er wieder die Grundstellung einnimmt und das ausziehbare Möbelteil vollständig eingeschoben ist.

Auch andere Ausbildungen des Mitnehmers 2 und des Fangarms 5 sind möglich, um ein solches An- und Abkoppeln mit der Verschwenkung des Fangarms zwischen seiner Grundstellung und seiner Wartestellung zu ermöglichen. Unterschiedliche Arten von möglichen Mitnahmeverbindungen sind beispielsweise von herkömmlichen ausziehbaren Möbelteilen mit Selbsteinzügen (=Einziehmechaniken) her bekannt.

Das Funktionsprinzip der Vorrichtung ist ähnlich wie bei der zuvor beschriebenen ersten Ausführungsform, mit den im Folgenden beschriebenen Erweiterungen und Unterschieden.

Das innere Bremsteil 10 und ein auf dieses aufgesetztes Gehäuseteil 28 sind drehfest mit der Schiene 29 verbunden, welche ihrerseits am Möbelkorpus 30 befestigt ist. Die Befestigung an der Schiene 29 erfolgt vorzugsweise durch Rastvorsprünge des inneren Bremsteils 10 und des Gehäuseteils 28, die in Ausnehmungen in der Schiene 29 eingreifen. Auch eine Befestigung der Vorrichtung direkt am Möbelkorpus 30 ist denkbar und möglich.

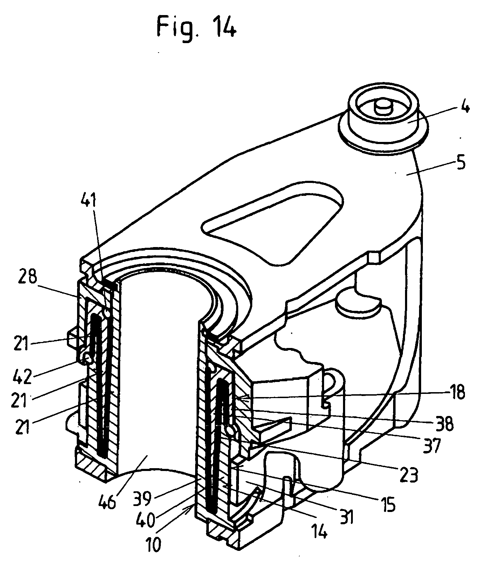

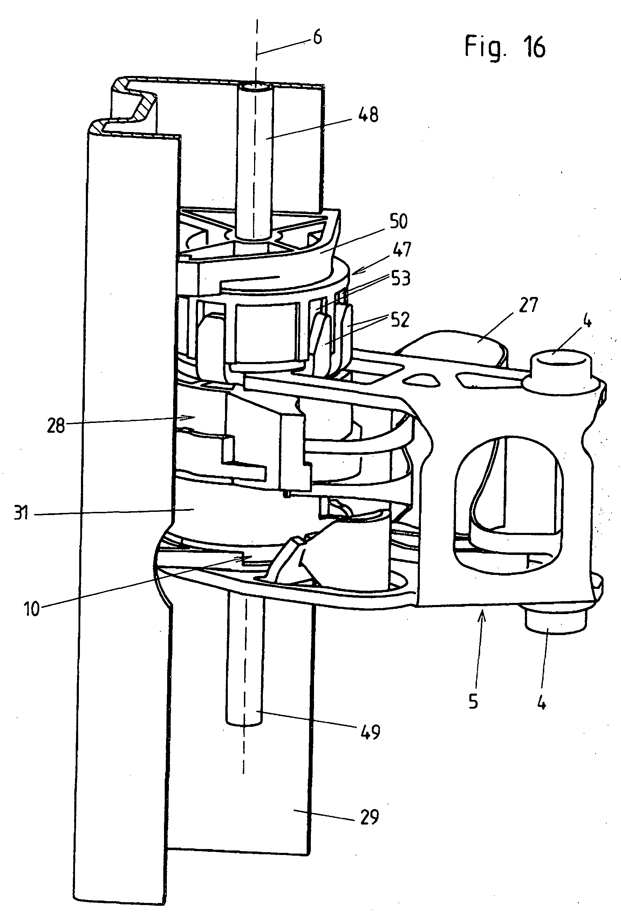

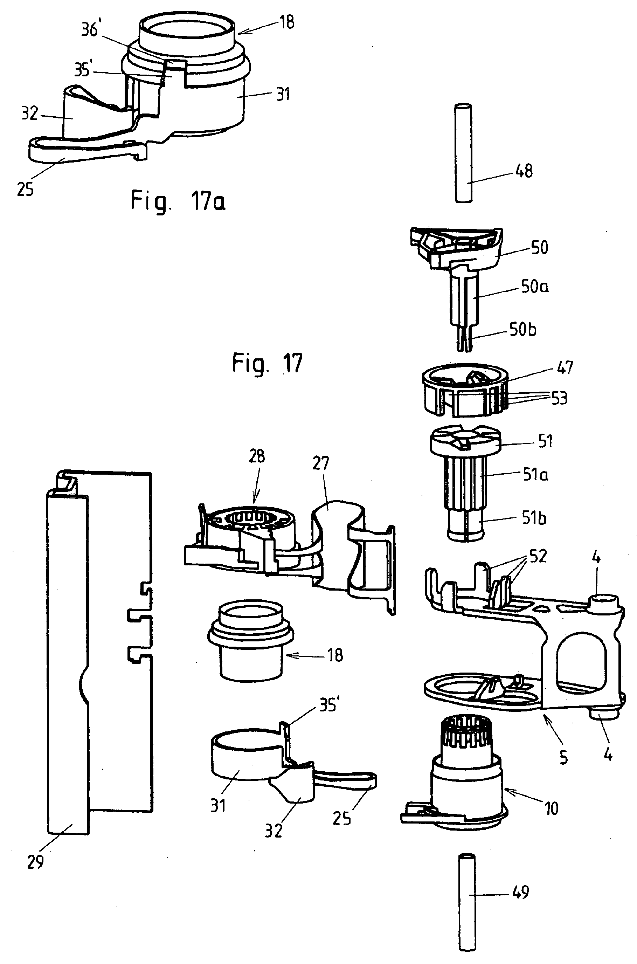

Die vom inneren Bremsteil 10 und vom Gehäuseteil 28 gebildete Einheit weist vorzugsweise einen diese vollständig axial durchsetzenden inneren Hohlraum auf (vgl. Fig. 14). Dieser kann Teile einer Ausziehsperrvorrichtung aufnehmen, wie weiter unten anhand von Fig. 16 und 17 beschrieben wird.

Der Fangarm 5 ist an der vom inneren Bremsteil 10 und dem Gehäuseteil 28 gebildeten Einheit um die Achse 6 drehbar gelagert.

Der Fangarm 5 ist mit einem vorgeformten, aber durch seine Elastizität flexiblen Umschlingungsteil 31 verbunden, sodass das Umschlingungsteil 31 bei einer Drehung des Fangarms 5 um die Achse 6 in Richtung des Pfeils 26 ebenfalls um die Achse 6 gedreht wird. Das Umschlingungsteil 31 wird im Ausführungsbeispiel von einem Band gebildet und verläuft um einen Großteil des Umfangs des inneren Bremsteils 10 um dieses herum. Die innere (=der Achse 6 zugewandte) Oberfläche des Umschlingungsteils 31 bildet eine angetriebene Reibfläche 14, die zur Erzeugung einer Bremskraft mit der äußeren (=von der Achse 6 weggerichteten) Oberfläche des inneren Bremsteils 10 zusammenwirkt, welche eine festgehaltene Reibfläche 15 bildet (im Ausführungsbeispiel ist dies der untere Abschnitt der Wand 40). Die angetriebene Reibfläche 14 und die festgehaltene Reibfläche 15 bilden die Reibpaarung der ersten, mechanisch wirkenden Bremsvorrichtung, welche das Umschlingungsteil 31 und das innere Bremsteil 10 umfasst.

Die Verbindung des Fangarms 5 mit dem Umschlingungsteil 31 erfolgt über eine Überlastfeder 32, die im gezeigten Ausführungsbeispiel einstückig mit dem Umschlingungsteil 31 ausgebildet ist und von einem bogen- bzw. schlaufenförmig verlaufenden Abschnitt des sowohl das Umschlingungsteil 31 als auch die Überlastfeder 32 bildenden Bandes gebildet wird. Die Geometrie dieses bogen- bzw. schlaufenförmigen Verlaufs und die Elastizität dieses Abschnitts des Bandes sind so ausgelegt, dass sich ein Federelement mit der gewünschten Federkennlinie ergibt. In modifizierten Ausführungsformen kann die Überlastfeder 32 auch von einem separaten Teil gebildet werden, das im Übertragungsweg zwischen dem Fangarm 5 und der mindestens einen angetriebenen Reibfläche 14 der ersten Bremsvorrichtung angeordnet ist. Stattdessen oder zusätzlich könnte auch eine Überlastfeder an einer anderen Stelle im Übertragungsweg der vom zu dämpfenden Bauteil auf die Vorrichtung übertragenen und die Vorrichtung antreibenden Kraft angeordnet sein, beispielsweise auch zwischen dem inneren Bremsteil 10 und der Schiene 29. In anderen Ausführungsformen kann eine Überlastfeder auch entfallen.

Der Übergang zwischen dem Umschlingungsteil 31 und der Überlastfeder 32 kann als vordere Verbindungsstelle 33 des Umschlingungsteils 31 angesehen werden, an der die zu dämpfende Bewegung des Bauteils 1 in das Umschlingungsteil 31 eingeleitet wird.

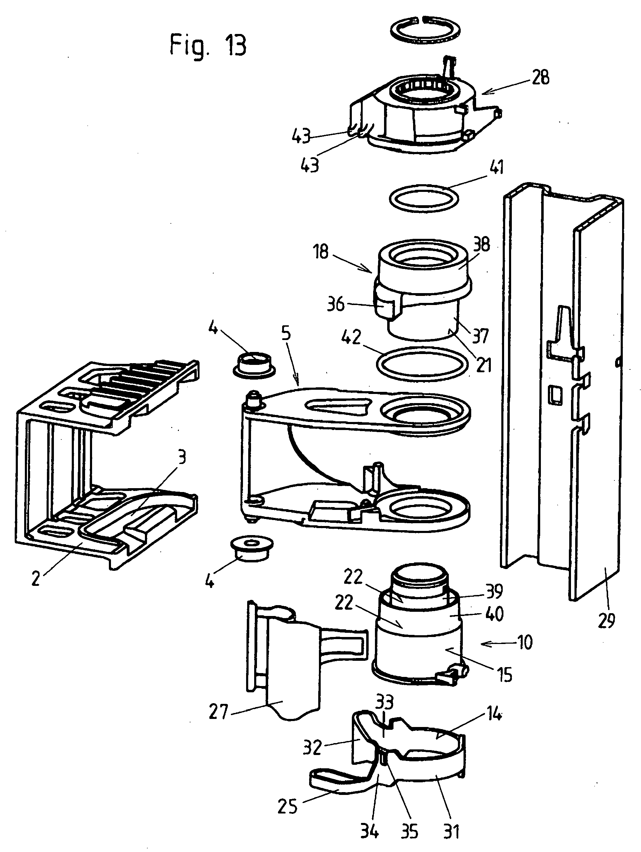

An einer hinteren Verbindungsstelle 34 ist das Umschlingungsteil 31 mit einer Dämpferhülse 18 verbunden. Hierbei ist im gezeigten Ausführungsbeispiel ein axialer Vorsprung des Umschlingungsteils 31, der einen Schlitz 35 aufweist, in eine Ausnehmung im Bereich der in Fig. 13 unten liegenden Seite eines radialen Vorsprungs 36 der Dämpferhülse 18 eingeschoben, wobei der Schlitz 35 in einen in dieser Ausnehmung angeordneten Steg eingreift (die Ausnehmung des radialen Vorsprungs 36 und der darin angeordnete Steg sind in Fig. 13 nicht sichtbar).

Zwischen der vorderen Verbindungsstelle 33 und der hinteren Verbindungsstelle 34 erstreckt sich das Umschlingungsteil 31 über mehr als 90°, vorzugsweise über mehr als 180°, besonders bevorzugt über mehr als 250° in eine erste (dem Pfeil 26 entgegengesetzte) Drehrichtung bezogen auf die Achse 6 um das innere Bremsteil 10. Im gezeigten Ausführungsbeispiel beträgt diese Erstreckung weniger als 360°. Eine Erstreckung um mehr als 360° ist möglich, d.h. das Umschlingungsteil weist dann mehr als eine ganze Windung auf, wobei es schraubenförmig um das innere Bremsteil 10 verläuft.

Die hintere Verbindungsstelle 34 des Umschlingungsteils 31 ist über eine Offenhaltefeder 25 mit dem Fangarm 5 verbunden. Diese Offenhaltefeder 25 ist in diesem Ausführungsbeispiel einteilig mit dem Umschlingungsteil 31 ausgebildet und wird von einem bogen- bzw. schlaufenförmig verlaufenden Abschnitt des Bandes gebildet, das auch das Umschlingungsteil 31 und gegebenenfalls die Überlastfeder 32 ausbildet. Die Geometrie des bogen- bzw. schlaufenförmigen Verlaufs und die Elastizität dieses Abschnitts des Bandes sind an eine gewünschte Federkennlinie angepasst. Die Funktion der Offenhaltefeder 25, die beim Dämpfen der Bewegung des Bauteils 1 die hintere Verbindungsstelle des Umschlingungsteils gegenüber der vorderen Verbindungsstelle des Umschlingungsteils in die Drehrichtung 26 (dies ist die entgegengesetzte Drehrichtung, in welche sich das Umschlingungsteil von der vorderen Verbindungsstelle zur hinteren Verbindungsstelle um die Achse 6 erstreckt) beaufschlagt, ist zumindest weitgehend analog der im ersten Ausführungsbeispiel beschriebenen Offenhaltefeder und wird weiter unten noch genauer beschrieben.

Die Offenhaltefeder 25 könnte auch von einem separaten Teil gebildet werden oder auch entfallen.

Die Überlastfeder 32 ist wesentlich härter, vorzugsweise mehr als 10 mal härter als die Offenhaltefeder 25.

Die Dämpferhülse 18 weist in diesem Ausführungsbeispiel eine Wand 37 auf, die in einen Schlitz zwischen einer inneren und einer äußeren Wand 39, 40 des inneren Bremsteils 10 eingreift. Weiters weist die Dämpferhülse 18 eine Wand 38 auf, die einen oberen Abschnitt der äußeren Wand 40 des inneren Bremsteils 10 übergreift. Die Innen- und Außenflächen der Wand 37 der Dämpferhülse 18 und die Innenfläche der Wand 38 der Dämpferhülse 18 bilden angetriebene Dämpferflächen 21. Die Außenfläche der Wand 39 des inneren Bremsteils 10, die Innenfläche der Wand 40 des inneren Bremsteils 10 und der obere Abschnitt der Außenfläche der Wand 40 des inneren Bremsteils 10 bilden festgehaltene Dämpferflächen (der untere Abschnitt der Wand 40 bildet die festgehaltene Reibfläche 15). Zwischen den angetriebenen Dämpferflächen 21 und den festgehaltenen Dämpferflächen 22 befindet sich jeweils einen ringförmigen Spalt, in dem ein viskoses Dämpfungsmedium 23 angeordnet ist. Dichtungsringe 41, 42 begrenzen den Spalt zwischen der Außenfläche der Wand 39 und der Innenfläche der Wand 37 am oberen Ende und den Spalt zwischen dem oberen Abschnitt der Außenfläche der Wand 40 und der Innenfläche der Wand 38 an ihrem unteren Ende, sodass ein abgedichteter Raum ausgebildet wird. Als Dämpfungsmedium kann daher ein fließfähiges Öl eingesetzt werden. Der Einsatz eines nicht fließfähigen Fettes ist aber ebenfalls möglich. Die Dichtungsringe 41, 42 könnten dann grundsätzlich auch entfallen.

Die zweite Bremsvorrichtung umfasst somit die Dämpferhülse 18, das innere Bremsteil 10 und das Dämpfungsmedium 23.

Durch die Drehung des Fangarms 5 um die Achse 6 in die dem Pfeil 26 entsprechende Drehrichtung wird das Umschlingungsteil 31 um die Achse 6 gedreht, wodurch durch die Verbindung des Umschlingungsteils 31 mit der Dämpferhülse 18 diese um die Achse 6 gedreht wird. Die Achse 6 bildet somit sowohl die Drehachse der ersten als auch die Drehachse der zweiten Bremsvorrichtung. Je nach Geschwindigkeit der Drehung der Dämpferhülse 18 um die Achse 6 übt die zweite Bremsvorrichtung eine mehr oder weniger große Bremskraft aus, wodurch zwischen der vorderen Verbindungsstelle 33 und der hinteren Verbindungsstelle 34 des Umschlingungsteils 31 eine mehr oder weniger große Zugkraft wirkt. Je nach der Größe dieser Zugkraft erfolgt eine mehr oder weniger starke Anpressung der angetriebenen Reibfläche 14 an die festgehaltene Reibfläche 15.

Im Ruhezustand der Vorrichtung weist das Umschlingungsteil 31 vorteilhafterweise zumindest abschnittsweise einen Abstand von der festgehaltenen Reibfläche 15 auf. Vorzugsweise weist das Umschlingungsteil 31 aufgrund seiner Vorformung im Ruhezustand über zumindest im Wesentlichen den gesamten Verlauf seiner Reibfläche 14, d.h. zumindest über 90% ihrer Ausdehnung in die Umfangsrichtung, einen Abstand von der Reibfläche 15 des inneren Bremsteils 10 auf.

Durch die Elastizität des Umschlingungsteils 31 und/oder durch die vorzugsweise vorhandene Offenhaltefeder 25 ist die Reibfläche 14 des Umschlingungsteils 31 dann bis zu einem Grenzwert der Geschwindigkeit des Bauteils 1 bzw. einem Grenzwert der Drehgeschwindigkeit des Fangarms 5 von der Reibfläche 15 des inneren Bremsteils 10 beabstandet (zumindest abschnittsweise) und die erste Bremsvorrichtung ist im Wesentlichen unwirksam (d. h. ihre Bremswirkung ist jedenfalls kleiner als die Bremswirkung der zweiten Bremsvorrichtung). Erst bei einer Überschreitung dieses Grenzwerts wird die erste Bremsvorrichtung wirksam.

Bei einer hohen Geschwindigkeit, mit der das Bauteil 1 auf den Fangarm 5 auftrifft, würde es ohne die Überlastfeder 32 zu einer plötzlich auftretenden hohen Bremskraft der Vorrichtung kommen, wodurch unerwünscht hohe Belastungen und ein unerwünscht starkes Abbremsen des Bauteiles 1 die Folge wären. Durch die Überlastfeder 32 wird die Spitze der Bremskraft abgefedert, indem sich der Fangarm 5 gegenüber dem Umschlingungsteil 31 unter Verformung der Überlastfeder 32 verdrehen kann.

Im dargestellten Ausführungsbeispiel ist weiters wie bereits erwähnt, eine Einzugsfeder 27 vorhanden, die, wenn lediglich die Dämpfungsfunktion gewünscht ist, auch entfallen könnte. Die Einzugsfeder 27 verläuft zwischen dem Fangarm 5 und der vom Gehäuseteil 28 und dem inneren Bremsteil 10 gebildeten Einheit. Insbesondere sind am Gehäuseteil 28 Rastarme 43 angeordnet, zwischen die das innere (= näher bei der Achse 6 gelegene) Ende der Einzugsfeder 27 eingerastet werden kann.

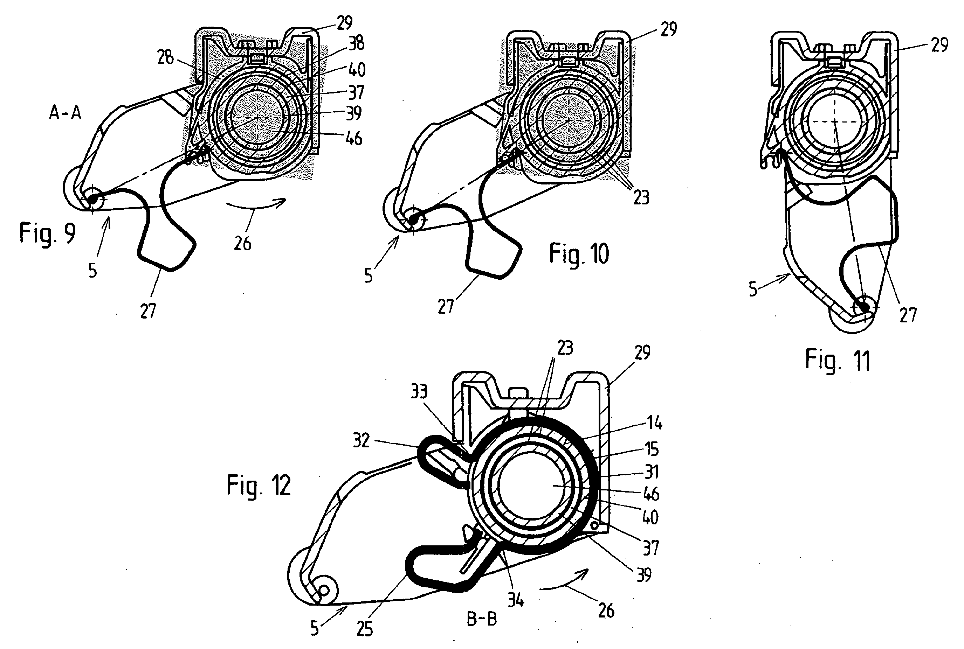

Beim Verschwenken des Fangarms 5 ausgehend von seiner Grundstellung in Richtung seiner Wartestellung wird die Einzugsfeder 27 zunächst gespannt, vgl. Fig. 11 und Fig. 10. Kurz vor Erreichen der Wartestellung wird ein Totpunkt überquert (dies ist die in Fig. 10 dargestellte Stellung), in der Folge wird die Einzugsfeder bis zum Erreichen der in Fig. 9 dargestellten Wartestellung wieder ein wenig entspannt (um vorzugsweise weniger als ein Fünftel des vorausgehenden Kompressionshubes).

Wenn beim Einschieben des ausziehbaren Möbelteils der Mitnehmer 2 an den Fangarm 5 anläuft, so koppeln diese beiden Teile aneinander an und der Mitnehmer 2 verschwenkt den Fangarm 5 über seinen Totpunkt. In der Folge wird das ausziehbare Möbelteil vom Fangarm 5 durch die Kraft der Einzugsfeder 27 eingezogen, bis die in Fig. 11 dargestellte Grundstellung des Fangarms erreicht ist. Die weitere Verschwenkung ist in der Wartestellung und der Grundstellung durch entsprechende Anschläge begrenzt (in der Grundstellung kann dies auch durch einen Anschlag für die Einschubbewegung des ausziehbaren Möbelteils erreicht werden).

Das Einziehen des ausziehbaren Möbelteils erfolgt hierbei gegen die von der Vorrichtung ausgeübte Bremskraft. Da die Geschwindigkeit des Einziehens, gegebenenfalls nach Dämpfung der zunächst schnelleren Geschwindigkeit beim Anlaufen gegen den Fangarm, relativ gering ist, ist hierbei im Wesentlichen nur die relativ geringe Bremskraft der zweiten Bremsvorrichtung zu überwinden. Die Kraft der Einzugsfeder 27 kann damit relativ niedrig ausgelegt werden, was das Ausziehen des ausziehbaren Möbelteils erleichtert.

Wenn die Einzugsfeder 27 in unterschiedlichen Abständen von der Achse 6 mit dem Gehäuseteil 28 verbunden werden kann, indem beispielsweise mehrere Rastarme 43 vorgesehen sind, kann die Stärke der Einzugskraft durch unterschiedliche Vorspannungen der Einzugsfeder 27 verändert werden. Auch Verbindungsmöglichkeiten an unterschiedlichen Stellen des Fangarms 5 können vorgesehen sein oder eine kontinuierliche Änderung des Abstands von der Achse, z.B. durch ein Exzenterelement, kann vorgesehen sein.

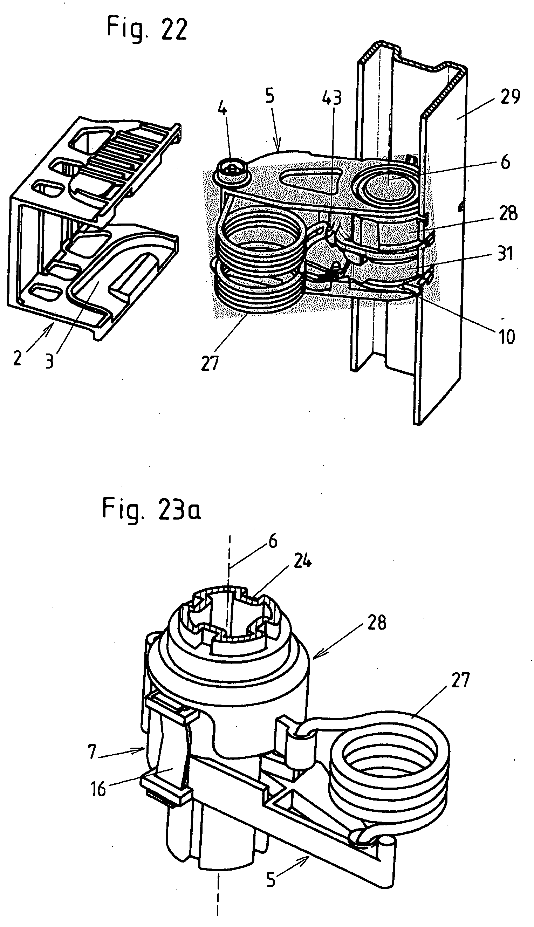

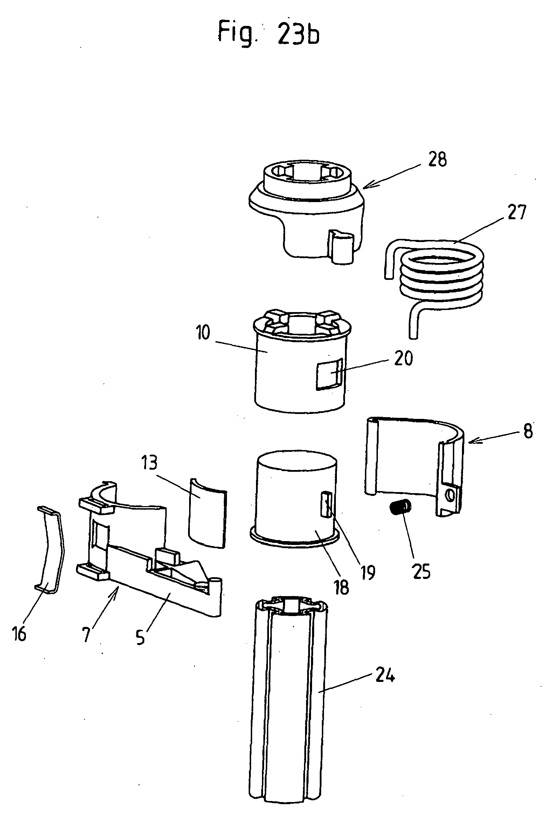

Im Ausführungsbeispiel ist als Einzugsfeder eine gebogene Blattfeder vorgesehen. Auch in anderer Weise ausgebildete Einzugsfedern können vorgesehen sein. Als Beispiel ist in Fig. 23 eine Ausführungsvariante mit einer Schenkelfeder dargestellt. Beispielsweise könnte auch eine gebogene Blattfeder vorgesehen sein, die in einen mittleren Bereich gegebenenfalls eine größere Breite als in den endseitigen Anbindungsbereichen aufweist und auch beispielsweise nach oben oder unten gebogen verlaufen kann.

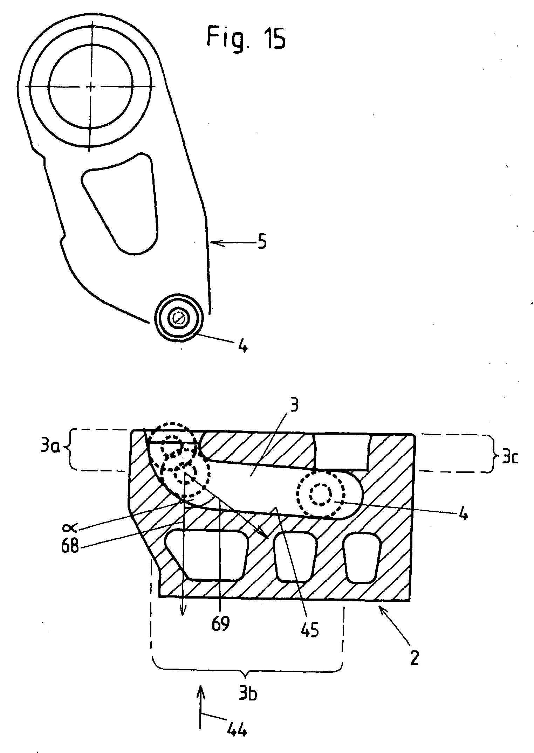

Das Einlaufen eines der Vorsprünge 4 des Einziehhebels 5 in die zugehörige Kulissenbahn 3 des Mitnehmers 2 beim Verschieben des Bauteils 1 in die Bewegungsrichtung 44 ist in Fig. 15 dargestellt. Die gebogen verlaufende Kulissenbahn 3 (der Verlauf beider Kulissenbahnen 3 ist identisch) besitzt einen Einlaufabschnitt 3a, an dessen Anfang der Vorsprung 4 von außerhalb der Kulissenbahn 3 in die Kulissenbahn 3 einfährt. Über den Einlaufabschnitt 3a führt die Kulissenbahn 3 den Vorsprung 4 in eine Richtung 69, die einen Winkel α von weniger als 30° mit der der Bewegungsrichtung 44 entgegengerichteten Ausziehrichtung 68 einschließt. Der Winkel α nimmt hierbei vom Anfang des Einlaufabschnitts 3a, bei welchem dieser Winkel α vorzugsweise weniger als 20° beträgt, besonders bevorzugt weniger als 15°, bis zum Ende des Einlaufabschnitts 3a kontinuierlich zu. Das Ende des Einlaufabschnitts 3a und der Beginn eines Fortsetzungsabschnitts 3b der Kulissenbahn 3 liegen also dort, wo dieser Winkel α den Wert von 30° erreicht. Über den Fortsetzungsabschnitt 3b nimmt dieser Winkel α weiter zu, bis er jedenfalls mehr als 45°, im gezeigten Ausführungsbeispiel zwischen 80° und 90° beträgt. In Fig. 15 ist der Winkel α für eine Position des Vorsprungs 4 innerhalb des Fortsetzungsabschnitts 3b eingezeichnet, in welcher der Winkel α etwas mehr als 45° beträgt.

Im gezeigten Ausführungsbeispiel ist der Winkel α, sobald er seinen maximalen Wert erreicht hat, bis zum Ende des Fortsetzungsabschnitts 3b konstant. Auch eine gekrümmte Ausbildung der Kulisse 3 zum vom Einlaufabschnitt 3a abgelegenen Ende des Fortsetzungsabschnitts 3b hin ist in anderen Ausführungsbeispielen möglich.

Der Vorsprung 4 ist von der Kulissenbahn 3 somit zumindest über einen an den Anfang des Einlaufabschnitts 3a anschließenden Teil des Einlaufabschnitts von der Kulissenbahn 3 unter einem Winkel von weniger als 20°, vorzugsweise weniger als 15° zur Ausziehrichtung 68 geführt. Zumindest über einen Teil des Fortsetzungsabschnitts 3b ist der Vorsprung 4 von der Kulissenbahn 3 vorzugsweise in eine Richtung geführt, die mit der Ausziehrichtung 68 einen Winkel von mehr als 70°, vorzugsweise mehr als 80° einschließt.

In Fig. 15 sind drei Stellungen des Vorsprungs 4 beim Einlaufen in die Kulissenbahn 3 mit strichlierten Linien dargestellt. Die erste Stellung zeigt gerade das erste Anlaufen des Vorsprungs 4 an die Seitenwand 45 der Kulissenbahn 3, durch welche der Einziehhebel 5 über den Totpunkt verschwenkt wird (diese Seitenwand 45 ist dann im Fortsetzungsabschnitt 3b die bezogen auf die Bewegungsrichtung 44 des Bauteils 1 hinten liegende Seitenwand der Kulissenbahn 3). Der Winkel α beträgt hier weniger als 20°, vorzugsweise weniger als 10°. In der zweiten Position befindet sich der Vorsprung 4 bereits im Fortsetzungsabschnitt 3b, wobei hier der Winkel α knapp größer als 45° ist. In der dritten dargestellten Position befindet sich der Vorsprung 4 im Fortsetzungsabschnitt 3b an der Stelle, die er im vollständig eingeschobenen Zustand des ausziehbaren Möbelteils einnimmt, wobei der Winkel α hier im Ausführungsbeispiel zwischen 80° und 90° liegt. Die Seitenwand 45 verläuft jeweils in die Richtung, in die der Vorsprung 4 von der Kulissenbahn 3 geführt ist, sodass der Winkel, den die Seitenwand 45 jeweils mit der Ausziehrichtung 68 einschließt, dem Winkel α zwischen der Richtung der Führung des Vorsprungs 4 und der Ausziehrichtung 68 entspricht.

Durch den beschriebenen gebogenen Verlauf der mindestens einen Kulissenbahn 3 kann die zur Betätigung des Fangarms 5 erforderliche Kraft beim Einschieben des Bauteils 1 beeinflusst werden. Insbesondere ergibt sich durch den Verlauf des Einlaufabschnitts 3a eine Art Übersetzung. Die auf das Bauteil 1 wirkende Dämpfungskraft wird dadurch, wenn das Bauteil 1 mit einer bestimmten Geschwindigkeit an den Fangarm 5 anläuft, zu Beginn des Anlaufens, wenn sich der Vorsprung 4 im Bereich des Einlaufabschnitts 3a der Kulissenbahn 3 befindet, verringert. Weiters kann dadurch der Totpunkt der Einzugsfeder 27 (wenn eine solche vorhanden ist) durch eine geringere vom Bauteil 1 aufzubringende Kraft überwunden werden.

Beim Zurückdrehen des Fangarms 5 in die dem Pfeil 26 entgegengesetzte Drehrichtung wird vom Fangarm 5 über die Offenhaltefeder 25 die Dämpferhülse 18 gedreht, sodass die hierbei zu überwindende Kraft auszuüben ist. Diese Kraft ist vergleichsweise gering, da die erste Bremsvorrichtung in diese Drehrichtung nicht wirksam ist. Wenn die Aufbringung einer solchen Kraft aber nicht gewünscht ist, kann zwischen einem mit dem Umschlingungsteil 31, gegebenenfalls über die Offenhaltefeder 25 und/oder die Überlastfeder 32, verbundenen Teil und dem Fangarm 5 ein Freilauf vorgesehen sein, der in die dem Pfeil entsprechende Drehrichtung 26 geschlossen ist und sich in die entgegengesetzte Drehrichtung öffnet. Solche Freilaufe sind bekannt, auch im Zusammenhang mit Dämpfern.

Aus Fig. 15 geht weiters ein Selbstheil-Abschnitt 3c der Kulissenbahn 3 hervor. Durch diesen kann der jeweilige Vorsprung 4 in den Fortsetzungsabschnitt 3b einlaufen, wenn der Mitnehmer 2 beim Einschieben des Bauteils 1 an den in seiner Grundstellung sich befindenden Einziehhebel 5 anlaufen sollte. Der Selbstheil-Abschnitt verläuft zumindest im Wesentlichen (d.h. eine Abweichung von weniger als 15° liegt vor) parallel zur Ausziehrichtung 68. Die Selbstheil-Abschnitte 3c sind zu ihren offenen Enden hin durch Einlaufschrägen verbreitert. Damit ein Einfahren der Vorsprünge 4 durch die Selbstheil-Abschnitte 3c ermöglicht wird, die Vorsprünge 4 aber nicht durch die Selbstheil-Abschnitte 3c aus den Fortsetzungsabschnitten 3b auslaufen können, können die Elastizitäten der Bauteile ausgenützt werden (sodass der Vorsprung 4 wie in Fig. 15 im eingefahrenen Zustand des Bauteils 1 versetzt zum Selbstheil-Abschnitt 3c liegt). Beispielsweise könnte auch beim Einfahren der Vorsprünge 4 durch die Selbstheil-Abschnitte 3c ein Überfahren von Stufen vorgesehen sein, wobei die die Kulissenbahnen 3 aufweisenden Seitenwangen 2a, 2b auseinandergedrückt werden. Zusätzlich oder stattdessen könnten am Mitnehmer 2 angeordnete, zusätzliche federelastische Rastelemente vorgesehen sein.

In einer gegenüber der dargestellten Ausführungsform modifizierten Ausführungsform könnte der Fangarm 5 auch verschwenkbar an der Dämpferhülse 18 gelagert sein und zwar um eine zur Achse 6 parallele Drehachse. Die Anbindung des Umschlingungsteils 31 oder der mit dem Umschlingungsteil 31 verbundenen Überlastfeder 32 könnte dann am Fangarm radial außerhalb dieser Schwenkachse erfolgen. Durch eine Rückstellfeder könnte der Fangarm 5 in eine Anfangsstellung bezüglich seiner Schwenkachse gegenüber der Dämpferhülse 18 beaufschlagt sein. Beim Dämpfen der Bewegung des Bauteils 1, wenn der Fangarm 5 gegen die Kraft der ihn beaufschlagenden Rückstellfeder um die Schwenkachse mehr oder weniger verschwenkt wird, da die Drehung der Schwenkachse um die Achse 6 von der Bremskraft der zweiten Bremsvorrichtung gebremst wird, wird das Umschlingungsteil 31 mehr oder weniger festgezogen und an die festgehaltene Reibfläche 15 angedrückt.

Auch andere linear verschiebbar gelagerte Bauteile als ausziehbare Möbelteile können von der Bremsvorrichtung gedämpft werden. Weiters ist auch eine Dämpfung von drehbar gelagerten Bauteilen möglich, wobei je nach Anwendungsfall eine Einzugsfeder 27 vorgesehen sein kann oder auch entfallen kann. Eine Anbindung des zu dämpfenden Bauteils an die Vorrichtung kann gegebenenfalls auch in anderer Weise als über einen um die Achse 6 drehbar gelagerten, radial auskragenden Fangarm (=Fanghebel) erfolgen, beispielsweise über ein um die Achse 6 drehbar gelagertes Ritzel, das mit dem Umschlingungsteil 31, gegebenenfalls über eine Überlastfeder 32 verbunden ist.

Das Umschlingungsteil 31 kann statt von einem Band auch von einem Draht, insbesondere Federdraht, bzw. einer Schnur gebildet werden. Der Umschlingungswinkel des Drahtes bzw. der Schnur liegt günstigerweise zwischen 90° und 530°, vorzugsweise zwischen 180° und 500°, wobei ein Umschlingungswinkel zwischen 250° und 330° besonders bevorzugt ist.

Auch eine kinematische Umkehr ist möglich, wobei das innere Bremsteil 10 bzw. die das innere Bremsteil 10 und gegebenenfalls auch das Gehäuseteil 28 umfassende Einheit vom zu dämpfenden Bauteil 1 angetrieben wird und das Umschlingungsteil 31 an seiner vorderen Verbindungsstelle 33 und über dieses die Dämpferhülse 18 festgehalten wird. Die zuvor beschriebene und in der Zeichnung dargestellte angetriebene Reibfläche 14 wird dann zur festgehaltenen Reibfläche und umgekehrt. Die zuvor beschriebene und in der Zeichnung dargestellte angetriebene Dämpferfläche 21 wird dann zur festgehaltenen Dämpferfläche und umgekehrt. Das Festhalten des Umschlingungsteils könnte dann auch von einem anderen Teil als von einem von der Achse 6 abstehenden Arm (entsprechend dem Fangarm 5) erfolgen.

Aus den Fig. 16, 17 und 17a geht eine Modifikation der zweiten Ausführungsform der Erfindung hervor, welche die Integration einer Ausziehsperrvorrichtung in eine erfindungsgemäße Vorrichtung darstellt. Abgesehen von den im Folgenden beschriebenen Unterschieden ist die erfindungsgemäße Vorrichtung gleich wie die anhand der Fig. 4 bis 15 beschriebene Ausführungsform der erfindungsgemäßen Vorrichtung ausgebildet.

Ausziehsperrvorrichtungen dienen dazu, dass von mehreren über die Ausziehsperrvorrichtung miteinander gekoppelten ausziehbaren Möbelteilen nur eines gleichzeitig ausziehbar ist. Erst nach dem Einschieben dieses ausziehbaren Möbelteils kann ein anderes ausgezogen werden. Weiters kann über eine solche Ausziehsperrvorrichtung, falls gewünscht, eine Zentralverriegelung bereitgestellt werden.

Bei der im Ausführungsbeispiel gezeigten Ausbildung der Ausziehsperrvorrichtung verlaufen zwischen Betätigungsteilen, die den einzelnen ausziehbaren Möbelteilen zugeordnet sind, Sperrstangen, die nur einen begrenzten Freiraum (=ein begrenztes Spiel) für ihre Verschiebung aufweisen. Wird eines der ausziehbaren Möbelteile ausgezogen, so werden die beiden (falls es sich um ein mittleres ausziehbares Möbelteil handelt, bei dessen Betätigungsteil beidseitig Sperrstangen angeordnet sind) mit dem Betätigungsteil zusammenwirkenden Sperrstangen vom Betätigungsteil auseinanderbewegt. Dadurch ist der vorhandene Freiraum aufgebraucht, sodass eine Auseinanderbewegung der mit einem anderen der Betätigungsteile zusammenwirkenden Sperrstangen nicht mehr möglich ist und somit kein weiteres ausziehbares Möbelteil mehr ausgezogen werden kann. Das Betätigungsteil eines endseitigen ausziehbaren Möbelteils kann auch nur mit einer Sperrstange zusammenwirken, welche es beim Ausziehen dieses ausziehbaren Möbelteils verschiebt. Die prinzipielle Ausbildung der Ausziehsperrvorrichtung entspricht insoweit dem Stand der Technik, beispielsweise entsprechend den eingangs genannten Schriften zu Ausziehsperrvorrichtungen.

Die vom inneren Bremsteil 10 und Gehäuseteil 28 gebildete Einheit weist einen in Richtung der Achse 6 sich erstreckenden, die Einheit vollständig durchsetzenden Hohlraum 46 auf. Von diesem können Teile der Ausziehsperrvorrichtung aufgenommen werden.

Durch ein, beim Ausziehen und Einschieben des ausziehbaren Möbelteils um die Achse 6 gedrehtes Teil, im gezeigten Ausführungsbeispiel durch den Fangarm 5, wird ein diesem ausziehbaren Möbelteil zugeordnetes Betätigungsteil 47 verstellt. Wenn ober- und unterhalb des ausziehbaren Möbelteils weitere ausziehbare Möbelteile angeordnet sind, so verschiebt das Betätigungsteil 47 eine obere Sperrstange 48 nach oben und/oder eine untere Sperrstange 49 nach unten. Falls es sich um das unterste ausziehbare Möbelteil handelt, könnte lediglich eine obere Sperrstange 48 nach oben verschoben werden. Falls es sich um das oberste ausziehbare Möbelteil handelt, könnte lediglich eine untere Sperrstange 49 nach unten verschoben werden.

Das Betätigungsteil 47 ist in diesem Ausführungsbeispiel als um die Achse 6 drehbare Nockenscheibe ausgebildet. An den vom Betätigungsteil 47 betätigten Sperrstangen 48, 49 ist jeweils ein Nockenfolgerteil 50, 51 angebracht, wobei die Nockenfolgerteile 50, 51 gegen eine Verdrehung um die Achse 6 gesichert sind.

Bei einer Verdrehung des Betätigungsteils 47 um die Achse 6 in eine erste Drehrichtung werden die beiden Nockenfolgerteile 50, 51 auseinandergedrückt (durch eine Verschiebung mindestens einer der Sperrstangen parallel zur Achse 6) und bei einer Verdrehung in die entgegengesetzte Drehrichtung (entsprechend dem Pfeil 26) können sie sich wieder annähern.

Das Betätigungsteil 47 kann gegenüber dem Fangarm 5 in Richtung der Achse 6 um eine begrenzte Wegstrecke verschoben werden, wobei es dennoch in drehfester Verbindung mit dem Fangarm 5 bleibt. Im Ausführungsbeispiel weist hierzu der Fangarm 5 in Richtung der Achse 6 sich erstreckende Klauen 52 auf, die in Ausnehmungen 53 des Betätigungsteils 47 eingreifen.

Eine Verschiebung zumindest einer der Sperrstangen 48, 49 durch ein einem der ausziehbaren Möbelteile zugeordnetes Betätigungsteil, ohne dass die drehfeste Verbindung der restlichen Betätigungsteile mit dem jeweils zugehörigen Fangarm aufgehoben wird, wird dadurch ermöglicht.

Das Nockenfolgerteil 50 besitzt einen axialen Fortsatz 50a mit Rastzungen 50b. Das Nockenfolgerteil 51 besitzt einen axialen Fortsatz 51 a mit Rastzungen 51 b.

Das Nockenfolgerteil 51 ist mit dem Fortsatz 51 a in den Hohlraum 46 einsteckbar und das Nockenfolgerteil 50 ist mit dem Fortsatz 50a durch eine zentrale Öffnung des Betätigungsteils 47 hindurch in eine zentrale Öffnung des Nockenfolgerteils 51 einsteckbar. Durch die Rastzungen 50b, 51 b werden die Teile zur Montageerleichterung vor dem Zusammenbau der Vorrichtung zusammengehalten, wobei nach der Montage die erforderlichen Bewegungsspielräume erhalten bleiben.

Die Mitnahmeverbindung zwischen dem Umschlingungsteil 31 und der Dämpfungshülse 18 ist hier durch einen axialen Vorsprung 35' des Umschlingungsteils 31 und eine diesen aufnehmende Vertiefung 36' in der Dämpferhülse 18 angedeutet, vgl. insbesondere Fig. 17a.

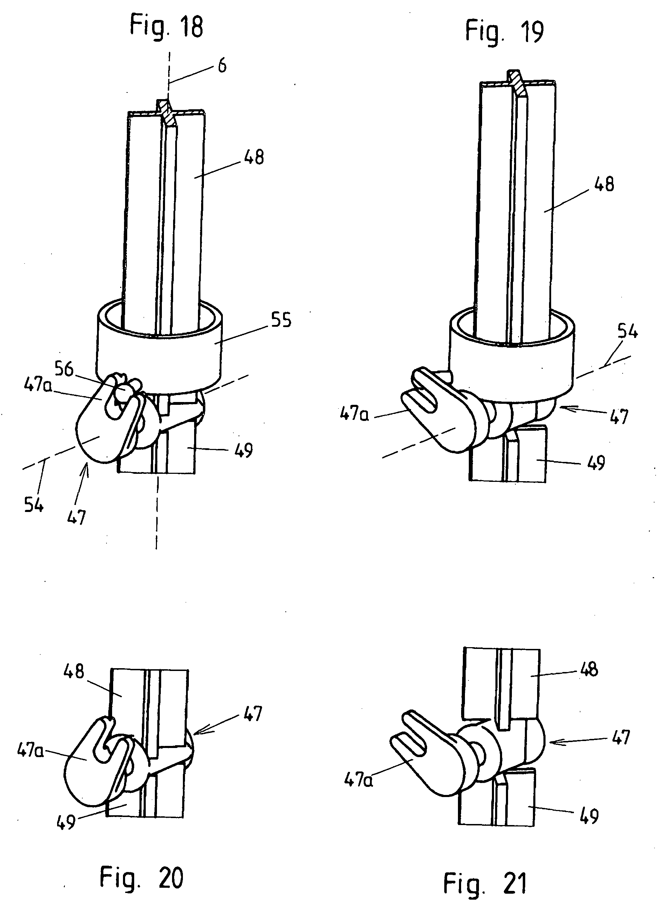

Die Betätigung der Sperrstangen 48, 49 könnte auch in anderer Weise erfolgen. Eine solche weitere mögliche Ausbildung ist in den Fig. 18 bis 21 dargestellt. Hier ist das Betätigungsteil 47 in Form eines Nockenteils ausgebildet, welches um eine rechtwinkelig zur Achse 6 liegende Schwenkachse 54 verschwenkbar ist. Das Betätigungsteil 47 wirkt hierbei mit dem Ende der mindestens einen angrenzenden Sperrstange 48, 49 oder einem mit dieser Sperrstange verbundenen Teil zusammen, um die Sperrstange 48, 49 bei seiner Verschwenkung um die Schwenkachse 54 in die jeweilige Richtung parallel zur Achse 6 zu verschieben.

Das Betätigungsteil 47 weist einen Betätigungsarm 47a auf, der von der Schwenkachse 54 radial absteht und mit einer um die Achse 6 verdrehbaren Hülse 55 in Verbindung steht. Bei der Verdrehung der Hülse 55 um die Achse 6 wird das Betätigungsteil 47 um die Schwenkachse 45 verschwenkt. Zwischen der Hülse 55 und dem Betätigungsarm 47a ist eine begrenzte Verschiebung in Richtung der Achse 6 möglich, beispielsweise durch eine gabelförmige Ausbildung des Endes des Betätigungsarms 47a, in die ein an der Hülse 55 angebrachter Zapfen 56 eingreift. Die Hülse 55 kann mit dem Fangarm 5 oder einem anderen Teil verbunden sein, welcher sich um die Achse 6 dreht, wenn der Fangarm um die Achse 6 verdreht wird, beispielsweise mit der Dämpferhülse 18. Auch eine einstückige Ausbildung mit dem Fangarm 5 oder dem um die Achse 6 gedrehten Teil, beispielsweise der Dämpferhülse 18 ist möglich.

Die durch die Ausziehsperrvorrichtung miteinander gekoppelten ausziehbaren Möbelteile könnten auch nebeneinander statt vertikal übereinander angeordnet sein. Die Sperrstangen 48, 49 und die Achse 6 wären dann horizontal angeordnet. Die in der vorausgehenden Beschreibung verwendeten Begriffe "oben" und "unten" müssten dann durch "links" und "rechts" ersetzt werden. Grundsätzlich denkbar und möglich sind auch gegenüber der Horizontalen geneigte Anordnungen der Sperrstangen 48, 49 und der Achse 6.

Die Fig. 23a und 23b zeigen noch eine Modifikation der anhand der Fig. 1 bis 3 beschriebenen ersten Ausführungsform, um die erste Ausführungsform mit einer Einzugsfeder 27 auszustatten. Diese ist beispielsweise wie dargestellt als Schenkelfeder ausgebildet (auch eine Ausbildung in anderer Form, beispielsweise in Form einer Blattfeder wie bei der zweiten Ausführungsform dargestellt könnte vorgesehen sein) und greift einerseits am Fangarm 5 und andererseits an einem Gehäuseteil 28 an, das drehfest bezüglich einer Drehung um die Achse 6 gehalten ist, beispielsweise durch eine drehfeste Verbindung mit der Welle 24. Auch eine drehfeste Verbindung mit dem inneren Bremsteil 10 könnte vorgesehen sein.

Die Funktion der Einzugsfeder 27 ist völlig analog wie im Zusammenhang mit der zweiten Ausführungsform beschrieben. Beim Verschwenken des Fangarms 5 von seiner Grundstellung in seine Wartestellung wird die Einzugsfeder 27 gespannt, wobei sie vor Erreichen der Wartestellung über einen Totpunkt verfahren wird und somit den in die Wartestellung verschwenkten Fangarm 5 in dieser hält.

In den zuvor beschriebenen Ausführungsbeispielen stimmt die Achse der ersten Bremsvorrichtung jeweils mit der Achse der zweiten Bremsvorrichtung überein, wie dies bevorzugt ist. Es sind aber auch Ausbildungen denkbar und möglich, bei denen diese Achsen beispielsweise parallel zueinander liegen, aber einen Abstand voneinander aufweisen. Auch winkelige Ausrichtungen zwischen diesen Achsen sind grundsätzlich möglich. Zwischen der ersten und der zweiten Bremsvorrichtung müssten dann entsprechende Übertragungsglieder beispielsweise Zahnräder vorgesehen sein.

In den beschriebenen Ausführungsformen ist jeweils eine erste mechanisch wirkende Bremsvorrichtung mit zwei gegeneinander um eine Achse verdrehbaren Teilen (=erster Rotationsdämpfer) und eine mit dieser ersten Bremsvorrichtung gekoppelte zweite Bremsvorrichtung vorhanden, deren Bremskraft von einem in mindestens einem Spalt zwischen zwei gegeneinander um eine Achse verdrehbaren Teilen angeordneten viskosen Dämpfungsmedium hervorgerufen wird (=zweiter Rotationsdämpfer). Hierbei sind in unterschiedlicher Weise modifizierte Ausbildungen einer solchen Vorrichtung möglich.

**Legende zu den Hinweisziffern:**

| | | | |
|---|---|---|---|
| 1 | Bauteil | 26 | Pfeil |
| 2 | Mitnehmer | 27 | Einzugsfeder |
| 3 | Kulissenbahn | 28 | Gehäuseteil |
| 3a | Einlaufabschnitt | 29 | Schiene |
| 3b | Fortsetzungsabschnitt | 30 | Möbelkorpus |
| 3c | Selbstheil-Abschnitt | 31 | Umschlingungsteil |
| 4 | Vorsprung | 32 | Überlastfeder |
| 5 | Fangarm | 33 | vordere Verbindungsstelle |
| 6 | Achse | 34 | hintere Verbindungsstelle |
| 7 | vorderes Backenteil | 35 | Schlitz |
| 8 | hinteres Backenteil | 35' | Vorsprung |
| 9 | Schwenkachse | 36 | Vorsprung |
| 10 | inneres Bremsteil | 36' | Vertiefung |
| 11 | Ende | 37 | Wand |
| 12 | Ende | 38 | Wand |
| 13 | Bremsbelag | 39 | Wand |
| 14 | angetriebene Reibfläche | 40 | Wand |
| 15 | festgehaltene Reibfläche | 41 | Dichtungsring |
| 16 | Andrückfeder | 42 | Dichtungsring |
| 17 | Öffnung | 43 | Rastarm |
| 18 | Dämpferhülse | 44 | Bewegungsrichtung |
| 19 | Mitnehmernase | 45 | Seitenwand |
| 20 | Fensterausnehmung | 46 | Hohlraum |
| 21 | angetriebene Dämpferfläche | 47 | Betätigungsteil |
| 22 | festgehaltene Dämpferfläche | 47a | Betätigungsarm |
| 23 | Dämpfungsmedium | 48 | Sperrstange |
| 24 | Welle | 49 | Sperrstange |
| 25 | Offenhaltefeder | 50 | Nockenfolgerteil |
| 50a | Fortsatz | 53 | Ausnehmung |
| 50b | Rastzunge | 54 | Schwenkachse |
| 51 | Nockenfolgerteil | 55 | Hülse |
| 51a | Fortsatz | 56 | Zapfen |
| 51b | Rastzunge | 68 | Ausziehrichtung |
| 52 | Klaue | 69 | Richtung |

## Patentansprüche

1. Vorrichtung zur Dämpfung der Bewegung eines beweglich gelagerten Bauteils (1), umfassend eine erste, mechanisch wirkende Bremsvorrichtung, welche mindestens eine Reibpaarung aufweist, bei der zur Erzeugung einer Bremskraft eine angetriebene Reibfläche (14) um eine Achse (6) der ersten Bremsvorrichtung gegenüber einer an ihr anliegenden festgehaltenen Reibfläche (15) verdrehbar ist, und eine zweite Bremsvorrichtung, die mit der ersten Bremsvorrichtung gekoppelt ist, wobei die gegenseitige Anpressung der Reibflächen (14, 15) der Reibpaarung oder von mindestens einer der Reibpaarungen der ersten Bremsvorrichtung in Abhängigkeit von einer von der zweiten Bremsvorrichtung ausgeübten Bremskraft erfolgt, wobei die zweite Bremsvorrichtung mindestens eine um eine Achse (6) der zweiten Bremsvorrichtung drehbare, angetriebene Dämpferfläche (21) aufweist, die mit mindestens einer festgehaltenen Dämpferfläche (22) mindestens einen Spalt einschließt, in welchem sich ein viskoses Dämpfungsmedium (23) befindet, welches beim Verdrehen der mindestens einen angetriebenen Dämpferfläche (21) gegenüber der mindestens einen festgehaltenen Dämpferfläche (22) eine Bremskraft der zweiten Bremsvorrichtung hervorruft, **dadurch gekennzeichnet, dass** ein flexibel ausgebildetes Umschlingungsteil (31) ein inneres Bremsteil (10) zumindest um einen mehr als 90° betragenden Teil des Umfangs des inneren Bremsteils (10) umgibt oder mindestens zwei gelenkig miteinander verbundene Backenteile (7, 8) zusammen eine Umschlingungseinheit der ersten Bremsvorrichtung bilden, die ein inneres Bremsteil (10) zumindest über einen mehr als 90° betragenden Teil des Umfangs des inneren Bremsteils (10) umgibt, wobei das Umschlingungsteil (31) und das innere Bremsteil (10) oder die Umschlingungseinheit und das innere Bremsteil (10) die Reibpaarung oder mindestens eine der Reibpaarungen der ersten Bremsvorrichtung bilden, und dass die Übertragung der Bewegung des zu dämpfenden Bauteils (1) auf eine vordere Verbindungsstelle (33) des Umschlingungsteils (31) oder auf ein vorderes der Backenteile (7) der Umschlingungseinheit erfolgt, wobei das innere Bremsteil (10) festgehalten ist, oder die Übertragung der Bewegung des zu dämpfenden Bauteils (1) auf das innere Bremsteil (10) erfolgt, wobei die vordere Verbindungsstelle (33) des Umschlingungsteils (31) oder das vordere Backenteil (7) festgehalten ist, und dass eine hintere Verbindungsstelle (34) des Umschlingungsteils oder ein hinteres der Backenteile (8) der Umschlingungseinheit mit einer Dämpferhülse (18) verbunden ist, die mindestens eine der Dämpferflächen (21, 22) der zweiten Bremsvorrichtung aufweist.

2. Vorrichtung nach Anspruch 1, **dadurch gekennzeichnet, dass** die Achse (6) der ersten Bremsvorrichtung, um die die angetriebene Reibfläche (14) der Reibpaarung oder einer jeweiligen der Reibpaarungen der ersten Bremsvorrichtung drehbar ist, mit der Achse (6) der zweiten Bremsvorrichtung übereinstimmt, um die die mindestens eine angetriebene Dämpferfläche (21) der zweiten Bremsvorrichtung drehbar ist.

3. Vorrichtung nach Anspruch 1 oder 2, **dadurch gekennzeichnet, dass** das Umschlingungsteil (31) oder die Umschlingungseinheit das innere Bremsteil (10) zumindest um einen mindestens 180° betragenden Teils des Umfangs des inneren Bremsteils (10) umgibt.

4. Vorrichtung nach einem der Ansprüche 1 bis 3, **dadurch gekennzeichnet, dass** der Spalt, in welchem sich das viskose Dämpfungsmedium (23) befindet, eine Spaltbreite im Bereich von 0,1 mm bis 0,5mm aufweist.

5. Vorrichtung nach einem der Ansprüche 1 bis 4, **dadurch gekennzeichnet, dass** die Viskosität des Dämpfungsmediums (23) mehr als 20.000 Pa s beträgt.

6. Vorrichtung nach einem der Ansprüche 1 bis 5, **dadurch gekennzeichnet, dass** sich das Umschlingungsteil (31) von der vorderen Verbindungsstelle (33) zur hinteren Verbindungsstelle (34) in eine erste Drehrichtung um die Achse (6) der ersten Bremsvorrichtung erstreckt oder sich die Umschlingungseinheit vom von der gelenkigen Verbindung des vorderen Backenteils (7) abgelegenen Ende des vorderen Backenteils (7) bis zum von der gelenkigen Verbindung des hinteren Backenteils (8) abgelegenen Ende des hinteren Backenteils (8) in eine erste Drehrichtung um die Achse (6) der ersten Bremsvorrichtung erstreckt.

7. Vorrichtung nach Anspruch 6, **dadurch gekennzeichnet, dass** eine Offenhaltefeder (25) zumindest im Zustand der Vorrichtung, in dem diese die Bewegung des Bauteils (1) dämpft, die hintere Verbindungsstelle des Umschlingungsteils (31) gegenüber der vorderen Verbindungsstelle des Umschlingungsteils (31) oder das hintere Backenteil (8) gegenüber dem vorderen Backenteil (7) in eine der ersten Drehrichtung entgegengesetzte zweite Drehrichtung um die Achse (6) der ersten Bremsvorrichtung beaufschlagt.

8. Vorrichtung nach einem der Ansprüche 1 bis 7, **dadurch gekennzeichnet, dass** das innere Bremsteil (10) oder ein hiermit, vorzugsweise drehfest, verbundenes Teil die mindestens eine Dämpferfläche (22, 21) aufweist, die mit der mindestens einen Dämpferfläche (21, 22) der Dämpferhülse (18) den Spalt oder mindestens einen der Spalte bildet, in dem bzw. in denen sich das viskose Dämpfungsmedium (23) befindet.

9. Vorrichtung nach einem der Ansprüche 1 bis 8, **dadurch gekennzeichnet, dass** die Vorrichtung eine Überlastfeder (32) aufweist, welche im Übertragungsweg der vom zu dämpfenden Bauteil (1) auf die Vorrichtung übertragenen, die Vorrichtung antreibenden Kraft angeordnet ist.

10. Vorrichtung nach einem der Ansprüche 1 bis 9, **dadurch gekennzeichnet, dass** das zu dämpfende Bauteil (1) ein ausziehbares Möbelteil ist, das beim Einschieben an einen Fangarm (5) der Vorrichtung ankoppelt, der um die Achse (6) der ersten Bremsvorrichtung von einer Wartestellung in eine Grundstellung verschwenkbar ist und hierbei die mindestens eine angetriebene Reibfläche (14) der ersten Bremsvorrichtung um die Achse (6) der ersten Bremsvorrichtung verdreht.

11. Vorrichtung nach einem der Ansprüche 1 bis 8, **dadurch gekennzeichnet, dass** die Vorrichtung eine Überlastfeder (32) aufweist, welche im Übertragungsweg der vom zu dämpfenden Bauteil (1) auf die Vorrichtung übertragenen, die Vorrichtung antreibenden Kraft angeordnet ist, dass das zu dämpfende Bauteil (1) ein ausziehbares Möbelteil ist, das beim Einschieben an einen Fangarm (5) der Vorrichtung ankoppelt, der um die Achse (6) der ersten Bremsvorrichtung von einer Wartestellung in eine Grundstellung verschwenkbar ist und hierbei die mindestens eine angetriebene Reibfläche (14) der ersten Bremsvorrichtung um die Achse (6) der ersten Bremsvorrichtung verdreht, und dass die Überlastfeder (32) im Übertragungsweg zwischen dem Fangarm (5) und der mindestens einen angetriebenen Reibfläche (14) der ersten Bremsvorrichtung angeordnet ist.

12. Vorrichtung nach Anspruch 10 oder 11, **dadurch gekennzeichnet, dass** der Fangarm (5) von einer Einzugsfeder (27) beaufschlagt ist, wobei die Einzugsfeder in der Wartestellung des Fangarms (5) stärker gespannt ist als in der Grundstellung des Fangarms (5) und bei der Verstellung des Fangarms (5) von der Grundstellung in die Wartestellung ein Totpunkt der Einzugsfeder (27) überwunden wird.

13. Vorrichtung nach einem der Ansprüche 1 bis 12, **dadurch gekennzeichnet, dass** am zu dämpfenden Bauteil (1) oder an einem vom zu dämpfenden Bauteil (1) um eine Achse (6) verschwenkbaren Teil der Vorrichtung ein Mitnehmer (2) angeordnet ist, der mindestens eine Kulissenbahn (3) aufweist und am anderen dieser beiden Teile mindestens ein Vorsprung (4) angeordnet ist, der beim Dämpfen des Bauteils (1) in die mindestens eine Kulissenbahn (3) einfährt, wobei die Kulissenbahn (3) einen Einlaufabschnitt (3a), über welchen der Vorsprung (4) in eine Richtung (69) geführt ist, die mit der der Bewegungsrichtung (44) des Bauteils (1) entgegengesetzten Richtung (68) einen Winkel (α) von weniger als 45° einschließt, und einen an den Einlaufabschnitt (3a) anschließenden Fortsetzungsabschnitt (3b) aufweist, über welchen der Vorsprung (4) in eine Richtung (69) geführt ist, die mit der der Bewegungsrichtung (44) des Bauteils (1) entgegengesetzten Richtung (68) einen Winkel von mehr als 45° einschließt.

14. Vorrichtung nach Anspruch 13, **dadurch gekennzeichnet, dass** der Vorsprung (4) zumindest über einen Teil des Einlaufabschnitts (3a), der an den vom Fortsetzungsabschnitt (3b) abgewandten Beginn des Einlaufabschnitts (3a) anschließt, in eine Richtung (69) geführt ist, die mit der der Bewegungsrichtung (44) des Bauteils (1) entgegengesetzten Richtung (68) einen Winkel von weniger als 30°, vorzugsweise von weniger als 20° einschließt.

## Claims

1. A device for damping the movement of a movably mounted component (1), comprising a first, mechanically acting braking device which has at least one friction pairing, in which in order to generate a braking force a driven friction surface (14) can be rotated about an axis (6) of the first braking device relative to a secured friction surface (15) which lies against it, and a second braking device which is coupled to the first braking device, wherein the mutual pressing against each other of the friction surfaces (14, 15) of the friction pairing or of at least one of the friction pairings of the first braking device takes place dependent on a braking force exerted by the second braking device, wherein the second braking device has at least one driven damper surface (21) which is rotatable about an axis (6) of the second braking device, which surface encloses at least one gap with at least one secured damper surface (22), in which gap a viscous damping medium (23) is located which upon the rotation of the at least one driven damper surface (21) relative to the at least one secured damper surface (22) brings about a braking force of the second braking device, **characterised in that** a flexibly designed wraparound part (31) surrounds an inner braking part (10) at least over a part of the periphery of the inner braking part (10) which amounts to more than 90° or at least two jaw parts (7, 8) connected together in an articulated manner together form a wraparound unit of the first braking device which surrounds an inner braking part (10) at least over a part of the periphery of the inner braking part (10) which amounts to more than 90°, the wraparound part (31) and the inner braking part (10) or the wraparound unit and the inner braking part (10) forming the friction pairing or at least one of the friction pairings of the first braking device, and **in that** the movement of the component (1) to be damped is transmitted to a front connection point (33) of the wraparound part (31) or to a front one of the jaw parts (7) of the wraparound unit, the inner braking part (10) being secured, or the movement of the component (1) to be damped is transmitted to the inner braking part (10), the front connection point (33) of the wraparound part (31) or the front jaw part (7) being secured, and **in that** a rear connection point (34) of the wraparound part or a rear one of the jaw parts (8) of the wraparound unit is connected to a damper sleeve (18) which has at least one of the damper surfaces (21, 22) of the second braking device.

2. A device according to Claim 1, **characterised in that** the axis (6) of the first braking device about which the driven friction surface (14) of the friction pairing or a respective one of the friction pairings of the first braking device is rotatable corresponds to the axis (6) of the second braking device about which the at least one driven damper surface (21) of the second braking device is rotatable.

3. A device according to Claim 1 or 2, **characterised in that** the wraparound part (31) or the wraparound unit surrounds the inner braking part (10) at least by a part of the periphery of the inner braking part (10) which amounts to at least 180°.

4. A device according to one of Claims 1 to 3, **characterised in that** the gap in which the viscous damping medium (23) is located has a gap width in the range of 0.1 mm to 0.5 mm.

5. A device according to one of Claims 1 to 4, **characterised in that** the viscosity of the damping medium (23) is more than 20,000 Pa s.

6. A device according to one of Claims 1 to 5, **characterised in that** the wraparound part (31) extends from the front connection point (33) to the rear connection point (34) in a first direction of rotation about the axis (6) of the first braking device, or the wraparound unit extends from the end of the front jaw part (7) remote from the articulated connection of the front jaw part (7) to the end of the rear jaw part (8) remote from the articulated connection of the rear jaw part (8) in a first direction of rotation about the axis (6) of the first braking device.

7. A device according to Claim 6, **characterised in that** a holding-open spring (25), at least in the state of the device in which it damps the movement of the component (1), acts upon the rear connection point of the wraparound part (31) relative to the front connection point of the wraparound part (31), or the rear jaw part (8) relative to the front jaw part (7) in a second direction of rotation, contrary to the first direction of rotation, about the axis (6) of the first braking device.

8. A device according to one of Claims 1 to 7, **characterised in that** the inner braking part (10) or a part connected therewith, preferably in rotation-resistant manner, has the at least one damper surface (22, 21) which with the at least one damper surface (21, 22) of the damper sleeve (18) forms the gap or at least one of the gaps in which the viscous damping medium (23) is located.

9. A device according to one of Claims 1 to 8, **characterised in that** the device has an overload spring (32) which is arranged in the transmission path of the force which drives the device, which force is transmitted to the device from the component (1) to be damped.

10. A device according to one of Claims 1 to 9, **characterised in that** the component (1) to be damped is a pull-out furniture part which when pushed in couples with a catch arm (5) of the device which is pivotable about the axis (6) of the first braking device from a waiting position into a basic position and in so doing rotates the at least one driven friction surface (14) of the first braking device about the axis (6) of the first braking device.

11. A device according to one of Claims 1 to 8, **characterised in that** the device has an overload spring (32) which is arranged in the transmission path of the force which drives the device, which force is transmitted to the device from the component (1) to be damped, **in that** the component (1) to be damped is a pull-out furniture part which when pushed in couples with a catch arm (5) of the device which is pivotable about the axis (6) of the first braking device from a waiting position into a basic position and in so doing rotates the at least one driven friction surface (14) of the first braking device about the axis (6) of the first braking device, and **in that** the overload spring (32) is arranged in the transmission path between the catch arm (5) and the at least one driven friction surface (14) of the first braking device.

12. A device according to Claim 10 or 11, **characterised in that** the catch arm (5) is acted upon by a retraction spring (27), the retraction spring in the waiting position of the catch arm (5) being more greatly tensioned than in the basic position of the catch arm (5), and upon the adjustment of the catch arm (5) from the basic position into the waiting position a dead centre of the retraction spring (27) is overcome.

13. A device according to one of Claims 1 to 12, **characterised in that** an entraining means (2) is arranged on the component (1) to be damped or on a part of the device, pivotable about an axis (6) by the component (1) to be damped, which means has at least one slotted guide link (3), and at least one projection (4) is arranged on the other one of these two parts, which projection upon damping the component (1) moves into the at least one slotted guide link (3), the slotted guide link (3) having an entry portion (3a), via which the projection (4) is guided in a direction (69) which encloses an angle (α) of less than 45° with the direction (68) opposite to the direction of movement (44) of the component (1), and a continuation portion (3b) adjoining the entry portion (3a), via which continuation portion the projection (4) is guided in a direction (69) which encloses an angle of more than 45° with the direction (68) opposite to the direction of movement (44) of the component (1).

14. A device according to Claim 13, **characterised in that** the projection (4), at least over a portion of the entry portion (3a) which adjoins the beginning of the entry portion (3a) remote from the continuation portion (3b), is guided in a direction (69) which encloses an angle of less than 30°, preferably of less than 20° with the direction (68) opposite to the direction of movement (44) of the component (1).

## Revendications

1. Dispositif d'amortissement du mouvement d'un élément (1) monté mobile comprenant un premier dispositif de freinage à action mécanique qui comporte au moins un couple de friction, dans lequel, pour permettre d'obtenir une force de freinage, une surface de friction entraînée (14) est mobile en rotation autour d'un axe (6) du premier dispositif de freinage par rapport à une surface de friction fixe (15) appliqué sur celle-ci, et un second dispositif de freinage qui est accouplé au premier dispositif de freinage, la pression de contact des surfaces de friction (14, 15) du couple de friction ou d'au moins l'un des couples de friction du premier dispositif de freinage se produisant en fonction d'une force de freinage exercée par le second dispositif de freinage, le second dispositif de freinage comprenant au moins une surface d'amortissement entraînée (21) mobile en rotation autour d'un axe (6) du second dispositif de freinage et qui délimite avec au moins une surface d'amortissement fixe (21) au moins une fente dans laquelle se trouve un fluide d'amortissement visqueux (23), qui suscite, lors de la rotation de la surface d'amortissement entraînée (21) par rapport à la surface d'amortissement fixe (22) une force de freinage du second dispositif de freinage,
**caractérisé en ce qu'**
une pièce d'enroulement flexible (31) entoure une pièce de freinage interne (10) au moins sur une fraction supérieure à 90° de la périphérie de la pièce de freinage interne (10), ou, au moins deux pièces formant mâchoire (7, 8) articulées l'une sur l'autre forment conjointement une unité d'enroulement du premier dispositif de freinage, qui entoure une pièce de freinage interne (10) au moins sur une fraction supérieure à 90° de la périphérie de la pièce de freinage interne (10), la pièce d'enroulement (31) et la pièce de freinage interne (10) ou l'unité d'enroulement et la pièce de freinage interne (10) formant le couple de friction ou au moins l'un des couples de friction du premier dispositif de freinage, et la transmission du mouvement de l'élément (1) à amortir s'effectue sur une jonction avant (33) de la pièce d'enroulement (31) ou sur une pièce formant mâchoire avant (7) de l'unité d'enroulement, la pièce de freinage interne (10) étant immobilisée, ou la transmission du mouvement de l'élément (1) à amortir s'effectue sur la pièce de freinage interne (10), la fonction avant (33) de la pièce d'enroulement (31) ou la pièce formant mâchoire avant (7) étant immobilisée, et une jonction arrière (34) de la pièce d'enroulement ou une pièce formant mâchoire arrière (8) de l'unité d'enroulement est reliée à une douille d'amortissement (18) qui comporte au moins l'une des surfaces d'amortissement (21, 22) du second dispositif de freinage.

2. Dispositif conforme à la revendication 1,
**caractérisé en ce que**
l'axe (6) du premier dispositif de freinage autour duquel la surface de friction entraînée (14) du couple de friction ou de l'un des couples de friction du premier dispositif de freinage est mobile en rotation coïncide avec l'axe (6) du second dispositif de freinage autour duquel la surface d'amortissement entraînée (21) du second dispositif de freinage est mobile en rotation.

3. Dispositif conforme à la revendication 1 ou 2,
**caractérisé en ce que**
la pièce d'enroulement (31) ou l'unité d'enroulement entoure la pièce de freinage interne (10) au moins sur une fraction égale à au moins 180° de la périphérie de la pièce de freinage interne (10).

4. Dispositif conforme à l'une des revendications 1 à 3,
**caractérisé en ce que**
la fente dans laquelle se trouve le fluide d'amortissement visqueux (23) a une largeur située dans la plage de 0,1 mm à 0,5 mm.

5. Dispositif conforme à l'une des revendications 1 à 4,
**caractérisé en ce que**
la viscosité du fluide d'amortissement (23) est supérieure à 20.000 Pa s.

6. Dispositif conforme à l'une des revendications 1 à 5,
**caractérisé en ce que**
la pièce d'enroulement (31) s'étend de la jonction avant (33) à la jonction arrière (34) dans un premier sens de rotation autour de l'axe (6) du premier dispositif de freinage, ou l'unité d'enroulement s'étend, de l'extrémité de la pièce formant mâchoire avant (7) opposée à l'articulation de cette pièce formant mâchoire avant (7) à l'extrémité de la pièce formant mâchoire arrière (8) opposée à l'articulation de cette pièce formant mâchoire arrière (8) dans un premier sens de rotation autour de l'axe (6) du premier dispositif de freinage.

7. Dispositif conforme à la revendication 6,
**caractérisé en ce qu'**
au moins dans l'état dans lequel le dispositif amortit le mouvement de l'élément (1), un ressort de maintien ouvert (25) sollicite la jonction arrière de la pièce d'enroulement (31) par rapport à la jonction avant de la pièce d'enroulement (31) ou la pièce formant mâchoire arrière (8) par rapport à la pièce formant mâchoire avant (7) dans un second sens de rotation opposé au premier sens de rotation autour de l'axe (6) du premier dispositif de freinage.

8. Dispositif conforme à l'une des revendications 1 à 7,
**caractérisé en ce que**
la pièce de freinage interne (10) ou une pièce de préférence fixe en rotation liée à celle-ci comporte la surface d'amortissement (21, 22) qui forme avec la surface d'amortissement (21, 22) de la douille d'amortissement (18) la fente au moins l'une des fentes dans laquelle ou dans lesquelles se trouve le fluide d'amortissement visqueux (23).

9. Dispositif conforme à l'une des revendications 1 à 8,
**caractérisé en ce que**
le dispositif comporte un ressort de surcharge (32) qui est monté dans le chemin de transmission de la force entraînant le dispositif transmise par l'élément (1) à amortir au dispositif.

10. Dispositif conforme à l'une des revendications 1 à 9,
**caractérisé en ce que**
l'élément à amortir (1) est une partie de meuble déployable qui, lors de sa rétraction est accouplée à un bras de préhension (5) du dispositif qui est mobile en pivotement autour de l'axe (6) du premier dispositif de freinage d'une position d'attente à une position de base et déplace ainsi en rotation la surface de friction entraînée (14) du premier dispositif de freinage autour de l'axe (6) de ce premier dispositif de freinage.

11. Dispositif conforme à l'une des revendications 1 à 8,
**caractérisé en ce qu'**
il comporte un ressort de surcharge (32) qui est monté dans le chemin de transmission de la force entraînant le dispositif transmise par l'élément (1) à amortir au dispositif, l'élément (1) à amortir est une partie de meuble déployable qui, lors de sa rétraction est accouplée à un bras de préhension (5) du dispositif qui est mobile au pivotement autour de l'axe (6) du premier dispositif de freinage d'une position d'attente à une position de base, et déplace ainsi en rotation la surface de friction entraînée (14) du premier dispositif de freinage autour de l'axe (6) de ce premier dispositif de freinage, et le ressort de surcharge (32) est monté dans le chemin de transmission entre le bras de préhension (5) et la surface de friction entraînée (14) du premier dispositif de freinage.

12. Dispositif conforme à la revendication 10 ou 11,
**caractérisé en ce que**
le bras de préhension (5) est sollicité par un ressort de rétraction (27), ce ressort de rétraction étant plus fortement tendu dans la position d'attente du bras de préhension (5) que dans la position de base de ce bras (5), et, lors du déplacement du bras de préhension (5) de la position de base à la position d'attente un point mort du ressort de rétraction (27) est surmonté.

13. Dispositif conforme à l'une des revendications 1 à 12,
**caractérisé en ce que**
sur l'élément (1) à amortir ou sur un élément du dispositif pouvant être déplacé en pivotement autour d'un axe (6) par l'élément (1) à amortir est monté un organe d'entraînement (2) qui comporte au moins une piste formant coulisse (3), et sur l'autre de ces deux éléments est montée au moins une saillie (4) qui, lors de l'amortissement de l'élément (1) pénètre dans la piste formant coulisse (3), cette piste formant coulisse (3) comportant un segment d'entrée (3a) sur lequel la saillie (4) est guidée dans une direction (69) qui définit avec la direction (68) opposée à la direction de déplacement (44) de l'élément (1) un angle (a) inférieur à 45°, ainsi qu'un segment de prolongement (3b) connecté au segment d'entrée (3a) sur lequel la saillie (4) est guidée dans une direction (69) qui définit avec la direction (68) opposée à la direction de déplacement (44) de l'élément (1) un angle supérieur à 45°.

14. Dispositif conforme à la revendication 13,
**caractérisé en ce qu'**
au moins sur une partie du segment d'entrée (3a) connectée au début du segment d'entrée (3a) situé à l'opposé du segment de prolongement (3b), la saillie (4) est guidée dans une direction (69) qui définit avec la direction (68) opposée à la direction de déplacement (44) de l'élément (1) un angle inférieur à 30°, et de préférence inférieur à 20°.
